(19) **Europäisches Patentamt**

**European Patent Office**

**Office européen des brevets**

(11) **EP 0 899 591 B1**

(12) **EUROPÄISCHE PATENTSCHRIFT**

(45) Veröffentlichungstag und Bekanntmachung des Hinweises auf die Patenterteilung:
**13.09.2006 Patentblatt 2006/37**

(51) Int Cl.:
*G02B 6/255* $^{(2006.01)}$

(21) Anmeldenummer: **98111346.7**

(22) Anmeldetag: **19.06.1998**

(54) **Verfahren sowie Vorrichtung zum thermischen Verschweissen von Lichtleitfasern**

Method and apparatus for thermal splicing of optical fibres

Procédé et dispositif pour joindre thermiquement des fibres optiques

(84) Benannte Vertragsstaaten:
**CH DE FR GB LI SE**

(30) Priorität: **27.08.1997 DE 19737358**

(43) Veröffentlichungstag der Anmeldung:
**03.03.1999 Patentblatt 1999/09**

(73) Patentinhaber: **CCS Technology, Inc.**
**Wilmington, DE 19803 (US)**

(72) Erfinder: **Rügenberg, Gervin, Dipl.-Ing.**
**80689 München (DE)**

(74) Vertreter: **Epping - Hermann - Fischer**
**Postfach 20 07 34**
**80007 München (DE)**

(56) Entgegenhaltungen:
**EP-A- 0 321 947     US-A- 5 011 259**

- **T. EDER ET.AL.: "Einmodenspleisse automatisch Messen und Herstellen" NTZ NACHRICHTENTECHNISCHE ZEITSCHRIFT., Bd. 41, Nr. 4, April 1988, Seiten 230-233, XP002086670 BERLIN DE**
- **MITSURU MIYAUCHI ET AL: "FULLY AUTOMATIC AND HIGH-SPEED SPLICING MACHINE FOR OPTICAL FIBER RIBBONS" TRANSACTIONS OF THE INSTITUTE OF ELECTRONICS, INFORMATION AND COMMUNICATION ENGINEERS OF JAPAN, Bd. E72, Nr. 9, 1. September 1989, Seiten 970-978, XP000072356**
- **ISHIKURA A ET AL: "MASS SPLICE METHOD FOR SINGLE-MODE FIBER RIBBONS" JOURNAL OF OPTICAL COMMUNICATIONS, Bd. 10, Nr. 2, Juni 1989, Seiten 61-66, XP000047231**
- **A.K.DAS ET.AL.: "Low-loss fusion splices of optical fibers" JOURNAL OF LIGHTWAVE TECHNOLOGY., Bd. 3, Nr. 1, Februar 1985, Seiten 83-92, XP002086671 NEW YORK US**
- **M.MIYAUCHI ET.AL.: "Arc-fusion splice of multimode optical fibers using pre-fusion method" ELECTRONICS & COMMUNICATIONS IN JAPAN , Bd. 65, Nr. 2, Februar 1982, Seiten 61-70, XP002086672 NEW YORK US**

**Beschreibung**

Die Erfindung betrifft ein Verfahren zum thermischen Verschweißen zweier einander zugeordneter Lichtleitfaserenden.

Für die Herstellung einer möglichst einwandfreien Schweißverbindung zwischen den Enden zweier optischer Fasern, d.h. einem Faser- Spleiß, der möglichst dieselbe Querschnittsgeometrie aufweist wie der jeweiligen Faser entlang ihrem sonstigen Längsverlauf durchgehend zu eigen ist, kann insbesondere das Zusammenbringen der stirnseitig aufgeschmolzenen Faserenden kritisch sein. So führen beispielsweise etwaige Fehlpositionierungen der Faserenden aufeinander zu unzulässig hohen Spleiß- Dämpfungsverlusten. Ein Verfahren, mit dem solche Fehlpositionierungen zweier fluchtend miteinander zu verschweißender Faserenden erkannt werden können, ist z.B. aus der EP 0 400 408 bekannt. Dort werden die beiden Faserenden beleuchtet und ein so erzeugtes Bild der Faserenden mit dem Bildsensor einer Videokamera abgetastet. Weist die jeweilige Faser an ihrer Stirnseite gegebenenfalls auch noch unzulässig hohe Materialdefizite auf, die beispielsweise durch Materialverdampfungen, Ausbrüche des Glasmaterials, Bruchwinkelfehler oder dergleichen verursacht sein können, so wird das einwandfreie Zusammenbringen der Faserenden noch schwieriger.

In der Literaturstelle Mitsuru Miyauchi et al.: "Fully Automatic and High-Speed Splicing Machine for Optical Fiber Ribbons", Transactions of the Institute of Electronics, Information and Communication Engineers of Japan, Band E72, Nummer 9, 1. September 1998, Seiten 970 bis 978 ist ein Verfahren zum thermischen Verschweißen von Lichtleitfaserenden beschrieben, bei dem angeschmolzene Faserenden über ihre Stirnfläche hinaus um einem Vorschubweg in Faserlängsrichtung ineinander geschoben werden. Dadurch wird ein durch Positionsfehler unterschiedlicher Abstand der Stirnflächen der Faserenden ausgeglichen. Die Abweichungen in der Positionierung werden durch die Bewegung der Faser innerhalb des Lichtwellenleiterbändchens und durch das Zurechtschneiden des Faserbändchens bewirkt. In der Literaturstelle M. Miyauchi et al.: "Arc-Fusion Splice of Multimode Optical Fibers using Prefusion Method", Electronics & Communications in Japan, Band 65, Nummer 2, Februar 1982, Seiten 61 bis 70 sind Überlegungen beschrieben, um zum gegenseitigen Verschweißen einander zugeordnete Lichtleitfaserenden in einem vorbereitenden Anschmelzungsschritt stirnseitig zu kontaktieren.

Der Erfindung liegt die Aufgabe zugrunde, einen Weg anzugeben, wie die Enden zweier optischer Fasern möglichst einwandfrei miteinander verschweißt werden können, um eine Schweißverbindung möglichst mit Faserquerschnittsgeometrie zu erreichen.

Gemäß einem Verfahren wird die Aufgabe gelöst durch ein Verfahren zum thermischen Verschweißen zweier einander zugeordneter Lichtleitfasern an ihren jeweiligen Faserenden, bei dem für mindestens eines der Faserenden ein optisches Abbild in mindestens einer Projektionsebene erfasst wird, bei dem mindestens ein Abweichungskriterium für den etwaigen Unterschied des optischen Abbildes gegenüber einer gewünschten Soll-Endflächenform ermittelt wird, bei dem die angeschmolzenen Faserenden über ihre stirnseitigen Flächen hinaus um einen Vorschubweg in Faserlängsrichtung ineinander geschoben werden und bei dem in Abhängigkeit von dem Abweichungskriterium der Vorschubweg gesteuert wird, so dass der Vorschubweg umso größer ist je mehr die Form der stirnseitigen Fläche des mindestens einen Faserendes gegenüber der gewünschten Soll-Endflächenform abweicht.

Diese Aufgabe wird gelöst durch eine Vorrichtung nach Anspruch 7.

Dadurch wird unter einer Vielzahl praktischer Gebenheiten eine einwandfreie Verschweißung der beiden Faserenden ermöglicht

Sonstige Weiterbildungen der Erfindung sind in den Unteransprüchen wiedergegeben.

Die Erfindung und ihre Weiterbildungen werden nachfolgend anhand von Zeichnungen näher erläutert.

Es zeigen:

Figur 1        teilweise in perspektivischer Darstellung schematisch den Grundaufbau einer Einrichtung zur Durchführung des erfindungsgemäßen Verfahrens,

Figuren 2 mit 5        jeweils in schematischer sowie vergrößerter Darstellung eine Projektionsebene mit den optischen Abbildungen zweier miteinander zu verschweißender Faserenden, die jeweils unterschiedliche Stirnflächenformen aufweisen und in Abhängigkeit davon nach dem erfindungsgemäßen Verfahren bei ihrem Verschmelzen verschieden weit über ihre Kontaktierungsstelle hinaus ineinandergefahren werden,

Figur 6        als Einzelheit die stirnseitigen Geometrieverhältnisse des zweiten Faserendes von Figur5,

Figur 7        in schematischer Darstellung zur Durchführung des erfindungsgemäßen Verfahrens verschiedene Steuerkennlinien für den Vorschubweg des jeweiligen Faserendes über seine Kontaktierungsstelle hinaus,

| Figur 8 | in schematischer sowie vergrößerter Darstellung eine Projektionsebene mit den optischen Abbildungen zweier weiterer, erfindungsgemäß miteinander zu verschweißender Faserenden, |
|---|---|
| Figuren 9, 10 | jeweils in schematischer sowie vergrößerter Darstellung die sich ergebenden Materialflüsse sowie Materialverhältnisse des geschmolzenen Glasmaterials der beiden Faserenden von Figur 8, unmittelbar nachdem deren angeschmolzene Stirnflächen über ihre Kontaktierungsstelle hinaus mit unterschiedlichen Vorschubwegen, d.h. verschieden weit, ineinandergeschoben wurden, |
| Figuren 11, 12 | die Geometrieverhältnisse der fertigen Spleißverbindung der beiden Faserenden von Figur 8, die sich für die unterschiedlichen Vorschubwege nach den Figuren 9, 10 ergeben, |
| Figuren 13, 15, 17 | in schematischer sowie vergrößerter Darstellung weitere Paare miteinander zu verschweißender optischer Fasern, deren Stirnseiten unterschiedlich ausgebildet sind, und |
| Figuren 14, 16, 18 | in schematischer sowie vergrößerter Darstellung die sich jeweils ergebenden, zugehörigen Schweißverbindungen der je zwei miteinander zu verschweißenden Faserenden der Figuren 13, 15 sowie 17, deren angeschmolzene Stirnseiten jeweils mit ein und demselben, d.h. konstantem Vorschubweg ineinandergeschoben wurden. |

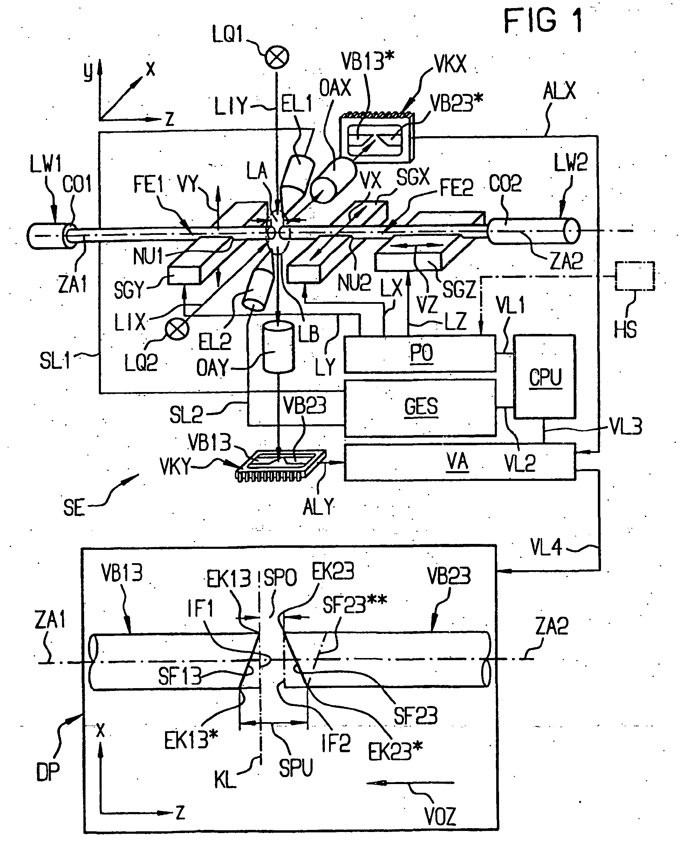

Elemente mit gleicher Funktion und Wirkungsweise sind in den Figuren 1 mit 18 jeweils mit den gleichen Bezugszeichen versehen.

Figur 1 zeigt beispielhaft eine Schweißeinrichtung SE, mit deren Hilfe zwei Lichtwellenleiter LW1, LW2 nach dem erfindungsgemäßen Verfahren miteinander thermisch verschweißt werden können. Die Schweißeinrichtung SE kann dabei vorzugsweise Bestandteil eines Lichtwellenleiter-Spleißgerätes sein. In der Schweißeinrichtung SE von Figur 1 stehen sich zunächst die stirnseitigen Enden der beiden Lichtwellenleiter LW1, LW2 in einem vorgebbaren axialen Längsabstand gegenüber. Der jeweilige Lichtwellenleiter LW1 bzw. LW2 erstreckt sich dabei annäherungsweise entlang einer Geradenlinie. Im Endbereich des ersten sowie zweiten Lichtwellenleiters LW1 bzw. LW2 ist jeweils dessen äußere Kunststoff-Beschichtung (= primäres und/oder sekundäres Coating) entlang einer vorgebbaren Endlänge entfernt. Somit ist dort im Endbereich des jeweiligen Lichtwellenleiters LW1, LW2 das Glasmaterial dessen Lichtleitfaser FE1, FE2 blank freigelegt. Dieses Absetzen des Lichtwellenleiter-Coatings wird zweckmäßigerweise vor dem Verschweißen der beiden Lichtwellenleiter LW1, LW2 durchgeführt, insbesondere noch vor dem Einlegen des jeweiligen Lichtwellenleiters LW1 bzw. LW2 in die Schweißeinrichtung SE. Zusätzlich hierzu kann gegebenenfalls von der jeweils freigelegten Lichtleitfaser FE1 bzw. FE2 eine vorgebbare, endseitige Teillänge abgetrennt bzw. abgeschnitten werden, um für die jeweilige Lichtleitfaser FE1 bzw. FE2 eine möglichst planflächige Stirnfläche vorzupräparieren, die möglichst senkrecht, das heißt im 90°-Winkel zur Zentralachse ZA1 bzw. ZA2 dieser Lichtleitfaser liegt.

Die freigelegten Lichtleitfasern bzw. Faserenden FE1 bzw. FE2 werden in der Schweißeinrichtung SE von Figur 1 jeweils in mindestens einer zugeordneten, entsprechenden Halte- bzw. Positioniereinrichtung bekannter Bauart, wie zum Beispiel Manipulatoren, festgehalten. Im vorliegenden Beispiel ist im einzelnen der ersten Lichtleitfaser FE1 die Halteeinrichtung SGY sowie der zweiten Lichtleitfaser FE2 die Halteeinrichtung SGX zugeordnet. Um die beiden sich in Längsrichtung einander gegenüberstehenden Enden der beiden Lichtleitfasern FE1, FE2 vor ihrem Verschweißen möglichst fluchtend aufeinander ausrichten zu können, ist mindestens eine der beiden Halteeinrichtungen SGY, SGX in mindestens eine Raumrichtung quer, bevorzugt senkrecht bzw. orthogonal zur jeweiligen Faserlängsachse verschiebbar ausgebildet. In der Figur 1 läßt die Halteeinrichtung SGY beispielsweise eine Bewegung in Y-Richtung sowie die zweite Halteeinrichtung SGX eine Bewegung in X-Richtung eines kartesischen Koordinatensystsems X, Y, Z zu. Die Verschiebemöglichkeit der ersten Lichtleitfaser FE1 in Y-Richtung ist dabei durch einen Doppelpfeil VY angedeutet sowie die Verschiebemöglichkeit der zweiten Lichtleitfaser FE2 in X-Richtung durch einen Doppelpfeil VX gekennzeichnet. Um die Enden der beiden optischen Fasern FE1, FE2 zur Bildung einer Schweißverbindung in Faserlängsrichtung aufeinander zufahren und miteinander kontaktieren zu können, ist in der Figur 1 beipielhaft der zweiten Lichtleitfaser FE2 eine zusätzliche Halte- bzw. Positioniereinrichtung SGZ zugeordnet, mit der sich die Lichtleitfaser FE2 in Faserlängsrichtung, das heißt hier in z-Richtung auf die erste Lichtleitfaser FE1 zu bewegen läßt. Die Verschiebebewegung in Z-Richtung ist dabei mit einem Dppelpfeil VZ angedeutet. Jede einzelne Halte- bzw. Positioniereinrichtung SGY, SGX sowie SGZ läßt sich jeweils über eine zugehörige Steuerleitung SGY, SGX, SGZ durch eine entsprechende Positionssteuereinheit, insbesondere mindestens ein Stellglied PO betätigen und in die jeweilige Richtung Y, X sowie Z verschieben.

Gegebenenfalls können die Halteeinrichtungen auch jeweils derart ausgebildet sein, daß sie sich von Hand in die jeweils gewünschte Raumposition bewegen lassen. Insbesondere kann das Stellglied PO auch über eine Handsteuerung HS, die in der Figur 1 strichpunktiert angedeutet ist, Steuersignale zur entsprechenden Verstellung der Positioniereinrichtungen SGY, SGX sowie SGZ erhalten.

Allgemein betrachtet sind also für die beiden Lichtleitfasern FE1, FE2 Halte- bzw. Positioniereinrichtungen vorgesehen, von denen mindestens eine in mindestens eine Raumrichtung verschiebbar ausgebildet ist. Bevorzugt ermöglichen die Halte- bzw. Positioniereinrichtungen Verschiebebewegungen der beiden Lichtleitfasern in alle drei Raumrichtungen, nämlich X, Y, Z eines kartesischen Koordinatensystems. Die Raumrichtung Z gibt dabei eine Längsrichtung, das heißt gewünschte Soll-Fluchtlinie vor, entlang der die Lichtleitfasern FE1, FE2 - insbesondere bezüglich ihrer Faserkerne - fluchtend aufeinander ausgerichtet werden sollen. Die Raumrichtung X verläuft in Querrichtung zur Längserstreckung der beiden Lichtleitfasern FE1, FE2, insbesondere senkrecht, das heißt orthogonal zur Raumrichtung Z.

Die Halteeinrichtungen SGY, SGX sowie SGZ von Figur 1 liegen dabei vorzugsweise in einer gemeinsamen Lageebene, die etwa parallel zu der von der X- sowie Z-Richtung aufgespannten Ebene angeordnet ist. Die Raumrichtung Y steht senkrecht zu dieser X-, Z-Ebene, das heißt sie verläuft nach oben oder unten.

Zur Durchführung des Ausrichtvorgangs werden die beiden Lichtleitfasern FE1, FE2 zunächst in Z-Richtung soweit auseinandergefahren, daß ihre Stirnflächen in definiertem, axialem Längsabstand voneinander positioniert sind.

Die Einstellung des Längsabstandes kann dabei mit Hilfe einer zentralen Rechen- und Steuereinrichtung CPU erfolgen. Diese kann das Stellglied PO über eine Steuerleitung VL1 anweisen, die Halteeinrichtung SGZ mit der auf ihr lagefixierten, zweiten Faser FE2 entsprechend in Z-Richtung zu verschieben.

Um für das Faserende der jeweiligen Lichtleitfaser FE1 bzw. FE2 jeweils ein optisches Abbild in mindestens einer Betrachtungsebene erfassen und dessen Bildinformation zur Auswertung bereitstellen zu können, weist die Schweißeinrichtung SE von Figur 1 mindestens ein optisches Abbildungssystem auf. Zur Erzeugung von Projektionsbildern der beiden Faserenden beispielsweise in der X, Z-Ebene werden mit Hilfe der Lichtquelle LQ1 eines ersten Abbildungssystems Lichtstrahlen LIY insbesondere im wesentlichen senkrecht zur X, Z-Ebene auf die Enden der beiden Lichtleitfasern FE1, FE2 gerichtet. Dabei tritt durch die Faserenden eine Abschattung der Lichtstrahlen LIY ein. Vorzugsweise sendet die Lichtquelle LQ1 ein farbiges oder weißes Licht in Richtung auf die Faserenden und beleuchtet diese. Dazu ist als Lichtquelle LQ1 zweckmäßigerweise eine Leuchtdiode oder Lampe vorgesehen. Auf der der Lichtquelle LQ1 gegenüberliegenden Seite der Lichtleitfasern FE1, FE2 ist eine Abbildungsoptik OAY im Strahlengang der Lichtstrahlen LIY angeordnet. Diese Abbildungsoptik OAY ist als Kreiszylinder dargestellt und repräsentiert vorzugsweise ein Objektivsystem, das mehrere Einzellinsen aufweist. Über die Abbildungsoptik OAY werden die Enden der Lichtleitfasern FE1, FE2 in ihren Schatten VB13, VB23 auf eine Fläche geworfen bzw. in eine Bildebene abgebildet, die in der X, Z-Ebene liegt. In dieser Projektionsebene werden die Schatten bzw. Projektionen VB13, VB23 der Enden der Lichtleitfasern FE1, FE2 mit Hilfe einer Aufnahmeeinrichtung, insbesondere Abtasteinrichtung VKY erfaßt bzw. aufgenommen, so daß für jede Faserabbildung bzw. jedes Schattenbild VB13, VB23 eine Intensitätsverteilung erhalten wird. Als Aufnahmeeinrichtung VKY des ersten Abbildungssystems ist vorzugsweise eine Videokamera vorgesehen, deren Bildsensor rechteckförmig ausgebildet ist. Bei dieser Durchleuchtung der Lichtleitfaserenden wirkt die jeweilige blanke, das heißt sauber entcoatete Lichtleitfaser vorzugsweise wie eine Zylinderlinse für das sie hindurchdringende Licht. Funktion und Wirkungsweise dieses Abbildungssystems sind detailliert in der US 5,011,259 beschrieben. Mit Hilfe dieses Abbildungssystems ist es möglich, die Lichtleitfasern FE1, FE2 bezüglich ihrer Außenkonturen weitgehend fluchtend aufeinander auszurichten. Dazu wird die Bildinformation der Faserabbildungen VB13, VB23 über eine Leitung ALY zu einer Speichereinrichtung VA, insbesondere zu einer Videobildspeichereinheit, übertragen und dort zu Auswertezwecken gespeichert. Die Aufnahmeeinrichtung VKY weist vorzugsweise ein Feld von lichtempfindlichen Elementen bzw. Lichtmeßzellen, insbesondere Fotodioden, auf, die in mehreren senkrecht zueinanderstehenden Zeilen und Spalten angeordnet sind. Die Zeilen des Bildsensors erstrecken sich vorzugsweise in Z-Richtung, während seine Spalten in X-Richtung verlaufen. Auf diese Weise wird der von der Aufnahmeeinrichtung VKY erfaßte, hier rechteckförmige Bildausschnitt der X,Z-Betrachtungsebene, auf den die Faserabbildungen fallen, pixelweise, d.h. Meßzelle für Meßzelle abgetastet.

Die Auswertung der aufgenommenen Abbildungen kann dabei zweckmäßigerweise mit Hilfe der Rechen- und Steuereinrichtung CPU durchgeführt werden, die die Speichereinrichtung VA über eine Leitung VL3 aus ansteuert. Insbesondere werden die Intensitätswerte der Faserabbildungen VB13, VB23 mit der gegebenen Auflösung der Aufnahmeeinrichtung VKY pixelweise erfaßt, in der Speichereinrichtung VA abgelegt und aus diesen Intensitäts- bzw. Helligkeitswerten Steuersignale zum Abgleich der Faserenden aufeinander in der X, Z-Ebene gewonnen. Daraufhin weist die Recheneinrichtung CPU über die Steuerleitung VL1 das Stellglied PO an, die Halteeinrichtung SGX solange in X-Richtung zu verschieben, bis der etwaige laterale Versatz der Faserabbildungen VB1, VB2 in X-Richtung zu null gemacht wird, wodurch dann die Ausrichtung der Lichtleitfasern in der X, Z-Ebene bezüglich ihrer Faserkerne und/oder Außenkonturen weitgehend fluchtend ist.

Analog dazu kann gegebenenfalls in anderen Lageebenen, wie zum Beispiel in der Y, Z-Ebene von Figur 1, ebenfalls eine weitgehend fluchtende Ausrichtung der Lichtleitfaserenden bezüglich ihrer Faserkerne oder Außenkonturen vorgenommen werden. Zur Ausrichtung der Faserenden beispielsweise in der Y, Z-Ebene, das heißt in einer Ebene senkrecht zur X, Z-Ebene, werden bei der Schweißeinrichtung von Figur 1 von der Lichtquelle LQ2 eines zweiten Abbildungssystems Lichtstrahlen LIX in X-Richtung senkrecht zur Y, Z-Ebene auf die Faserenden FE1, FE2 gerichtet, so daß diese beleuchtet werden. Auf der der Lichtquelle LQ2 gegenüberliegenden Seite der Fasern werden die durch die Faserenden FE1, FE2 abgeschatteten Lichtstrahlen mit Hilfe einer Abbildungsoptik OAX die entsprechend der ersten Abbildungsoptik OAY ausgebildet ist, in einer Projektionsebene abgebildet, die in der Y, Z-Ebene liegt. Mit Hilfe einer der Aufnahmeeinrichtung VKY entsprechenden Aufnahmeeinrichtung VKX werden für die beiden beleuchteten Faserenden FE1, FE2 in analoger Weise zur X, Z-Projektionsebene Projektionsabbildungen bzw. Schattenbilder VB13*, VB23* in der Y, Z-Ebene gewonnen. Die Bildinformation dieser Abbildungen VB13*, VB23* wird über eine Leitung ALX an die Speichereinrichtung VA übertragen und dort zur Auswertung mit Hilfe der Recheneinrichtung CPU bereitgestellt. Insbesondere werden die Intensitätswerte der Faserabbildungen VB13*, VB23* mit der gegebenen Auflösung der Aufnahmeeinrichtung VKY pixelweise erfaßt, in der Speichereinrichtung VA abgelegt und aus diesen Intensitäts- bzw. Helligkeitswerten Steuersignale zum Abgleich der Faserenden aufeinander in der Y, Z-Ebene gewonnen. Daraufhin weist die Recheneinrichtung CPU über die Steuerleitung VL1 das Stellglied PO an, die Halteeinrichtung SGY solange in Y-Richtung zu verschieben, bis der etwaige laterale Versatz der Faserabbildungen VB1, VB2 in Y-Richtung zu null gemacht wird, wodurch dann die Ausrichtung der Lichtleitfasern in der Y, Z-Ebene bezüglich ihrer Faserkerne und/oder Außenkonturen weitgehend fluchtend ist.

Auf diese Weise kann ein mehrdimensionaler Abgleich der Faserenden, das heißt in mehreren verschiedenen Lageebenen deren Ausrichtung aufeinander vorgenommen werden. Insbesondere kann der radiale Gesamtversatz der beiden Faserenden zueinander dadurch ermittelt werden, daß deren relative örtliche Lage zueinander in mindestens zwei Betrachtungsebenen ermittelt wird.

Gegebenenfalls kann es auch bereits ausreichend sein, für die beiden Fasern FE1, FE2 Halteeinrichtungen vorzusehen, die bezüglich der Faserlängsachsen in lateraler Richtung ortsfest angeordnet sind, d.h. die keine lateralen Verschiebebewegungen, sondern lediglich in Faserlängsrichtung Relativbewegungen der beiden Faserenden gegeneinander zulassen. In der Schweißeinrichtung von Figur 1 können also die beiden Halteeinrichtungen SGX, SGY auch fest, d.h. unbeweglich installiert sein. Bei dieser vereinfachten Ausführungsvariante der Schweißeinrichtung sind die Halteeinrichtungen wie z.B. SGY, SGX von Figur 1 zweckmäßigerweise derart dauerhaft - vorzugsweise bereits ab Werk - aufeinander ausgerichtet, daß ihre Einlegenuten NU1, NU2 für die Fasern FE1, FE2 stets weitgehend aufeinander fluchten. Selbstverständlich kann es gegebenenfalls auch zweckmäßig sein, die beiden Lichtleitfasern FE1, FE2 bezüglich ihrer Faserkerne oder Außenkonturen mit Hilfe einer anderen gängigen Ausrichtmethode fluchtend aufeinander auszurichten.

Bevorzugt kann dazu die Dämpfung von Meßlicht gemessen werden, das über den Luftspalt zwischen den beiden Faserenden transmittiert wird. Dort, wo die Transmission des übergekoppelten Meßlichts am größten ist, d.h. dessen Dämpfung am geringsten, liegt dann eine fluchtende Ausrichtung der Faserkerne vor. Funktion und Wirkungsweise dieser Dämpfungsmeßmethode sind detailliert in der US 5,078,489 beschrieben.

Die Relativlage der beiden Faserabbildungen in der jeweiligen Betrachtungsebene zueinander wird bei der Schweißeinrichtung SE von Figur 1 mit Hilfe einer Anzeigeeinrichtung, insbesondere einem Display DP visualisiert. Die Anzeigeeinrichtung DP ist dazu über eine Datenleitung VL4 mit der Speichereinrichtung VA verbunden. Das Display DP zeigt die Abbildungen VB13, VB23 der beiden Faserenden FE1, FE2 beispielhaft in der X, Z-Betrachtungsebene und zwar in einem Zustand, nachdem die beiden Faserenden FE1, FE2 in X- sowie Y- Richtung jeweils bereits weitgehend fluchtend aufeinander ausgerichtet wurden, aber noch nicht stirnseitig einander kontaktieren.

Beidseitig der Längserstreckung der beiden freigelegten Lichtleitfasern FE1, FE2 weist die Schweißeinrichtung SE von Figur 1 jeweils mindestens eine Schweißelektrode EL1, EL2 auf, das heißt die beiden Schweißelektroden EL1, EL2 sind auf einander gegenüberliegenden Längsseiten der Lichtleitfassern FE1, FE2 angeordnet. Insbesondere liegt die Schweißelektrode EL1 der Schweißelektrode EL2 um etwa 180˚ versetzt gegenüber.

Die beiden Schweißelektroden EL1, EL2 dienen als thermische Wärmequelle und sind dabei dem Zwischenraum zwischen den beiden Halteeinrichtungen SGY, SGX derart zugeordnet, daß sich zwischen ihnen jeweils ein sogenannter Lichtbogen durch Glimmentladungen queraxial, insbesondere senkrecht zur Längserstreckung der Lichtleitfasern FE1, FE2 ausbilden kann. Der Verlauf des Bereichs, in dem sich jeweils ein Lichtbogen zwischen den beiden Elektroden EL1, EL2 ausbreitet, ist in der Figur 1 mit Hilfe einer strichpunktierten Ellipse angedeutet und mit LB bezeichnet. Die beiden Schweißelektroden EL1, EL2 sind über zugehörige Stromleitungen SL1, SL2 an eine Glimmentladungs-Erzeugungseinrichtung GES, insbesondere an die Spannungsquelle eines Impulsgenerators zur Erzeugung von Spannungsimpulsen angeschlossen. Die Ansteuerung der Glimmentladungs-Erzeugungseinrichtung GES kann dabei mit Hilfe der Rechen- und Steuereinrichtung CPU über eine Steuerleitung VL2 erfolgen.

Nachdem ein zunächst etwaig vorhandener lateraler, insbesondere radialer Versatz der beiden Faserenden durch entsprechendes Verschieben der Halteeinrichtungen SGX, SGY weitgehend zu null gemacht worden ist, wird der Glimmentladungs-Bogen LB zwischen den beiden Elektroden EL1, EL2 zum Vorschweißen der beiden Faserenden FE1, FE2 gezündet. Dann werden die in definiertem Längsabstand LA voneinander entfernten Faserenden FE1, FE2 in Z-Richtung aufeinander zubewegt, so daß sie beide vom Lichtbogen LB für eine vorgebbare Vorschweißzeitdauer erfaßt werden. In der Figur 1 wird dazu die zweite Lichtleitfaser FE2 mit Hilfe der Halteeinrichtung SGZ in Z-Richtung auf die erste Lichtleitfaser FE1 zu verfahren, die in ihrer Halteeinrichtung SGY bezüglich der Z-Richtung ortsfest gelagert, insbesondere festgehalten wird. Im einzelnen werden die beiden Fasern bevorzugt zwischen die Elektroden gefahren, dann die Glimmentladung gestartet, die Vorschweißzeit abgewartet und dann erst bei ausgeschaltetem Lichtbogen entlang ihrer gewünschten Soll-Fluchtlinie in Z-Richtung aufeinander zubewegt, bis sie sich stirnseitig kontaktieren. Im Display DP von Figur 1 markiert die strichpunktiert gezeichnete Geradenlinie KL die gewünschte Soll-Stoßstelle bzw.- Kontaktierungsstelle für die Stirnflächen der beiden Faserenden FE1, FE2 bzw. für deren Abbildungen VB13, VB23 in der X,Z-Ebene. Sie erstreckt sich im wesentlichen in X-Richtung und bildet gleichzeitig eine gewünschte Soll-Symmetrielinie für die Gesamtanordnung der beiden Fasern unmittelbar bei deren gedachter, stirnseitiger Kontaktierung. Die Vorschubbewegung des zweiten Faserendes FE2 in Z-Richtung auf das erste Faserende FE1 zu ist im Display DP mit einem Pfeil VOZ angedeutet. Die Stirnflächen der Faserenden FE1 bzw. FE2 sind in der X,Z-Betrachtungsebene mit SF13 bzw. SF23 bezeichnet.

Um nun zwischen den beiden Faserenden FE1, FE2 eine möglichst einwandfreie Schweißverbindung mit einer Querschnittgeometrie herzustellen, die im wesentlichen der Querschnittsgeometrie der beiden Fasern entlang ihrem übrigen Längsverlauf entspricht, werden die angeschmolzenen Faserenden über ihre gedachte stirnseitige Kontaktierungsstelle KL hinaus erfindungsgemäß um einen umso größeren Vorschubweg bzw. Überhub in Faserlängsrichtung ineinander geschoben, je mehr ihre Stirnflächen gegenüber einer gewünschten Soll-Endflächenform abweichen. Im Rahmen der Erfindung wird dabei unter dem Begriff Überhub bzw. Vorschubweg insbesondere diejenige Strecke in Faserlängsrichtung verstanden, entlang der die geschmolzenen Glasmaterialien der beiden Faserenden ineinanderdringen, sich also dort miteinander vermischen sowie verschmelzen.

Als Soll-Endfläche des jeweiligen Faserendes ist vorzugsweise eine weitgehend plane Faserstirnfläche gewählt, auf der die Zentralachse des Faserendes im wesentlichen senkrecht steht. Im Display DP ist das Abbild einer solchen idealisierten Faserstirnfläche sowohl für das erste Faserende FE1 als auch für das zweite Faserende FE2 jeweils strichpunktiert in der X, Z-Betrachtungsebene mit eingezeichnet sowie mit dem Bezugzeichen IF1 bzw. IF2 versehen. Ideale Faserenden weisen also in der jeweiligen Betrachtungsebene, hier beispielsweise der X, Z-Projektionsebene, jeweils eine Projektionsabbildung mit vorzugsweise möglichst rechteckförmiger Außenkontur auf, das heißt räumlich betrachtet ist für das jeweilige Faserende idealerweise eine möglichst kreiszylinderförmige Geometrieform mit planer Stirnfläche gewünscht, zu der die Faserzentralachse eine Flächennormale bildet und durch deren Mittelpunkt die Faserzentralachse hindurchverläuft. Bei solchen Faserenden kämen deren Stirnflächen bezüglich der Kontaktierungslinie KL achssymmetrisch sowie dort weitgehend vollflächig in Kontakt, d.h. in der jeweiligen Betrachtungsebene würden sich die sichtbar abgebildeten Kanten idealer Stirnseiten IF1, IF2 auf der Soll-Kontaktierungslinie KL im wesentlichen entlang ihrer gesamten Projektionsbreite berühren.

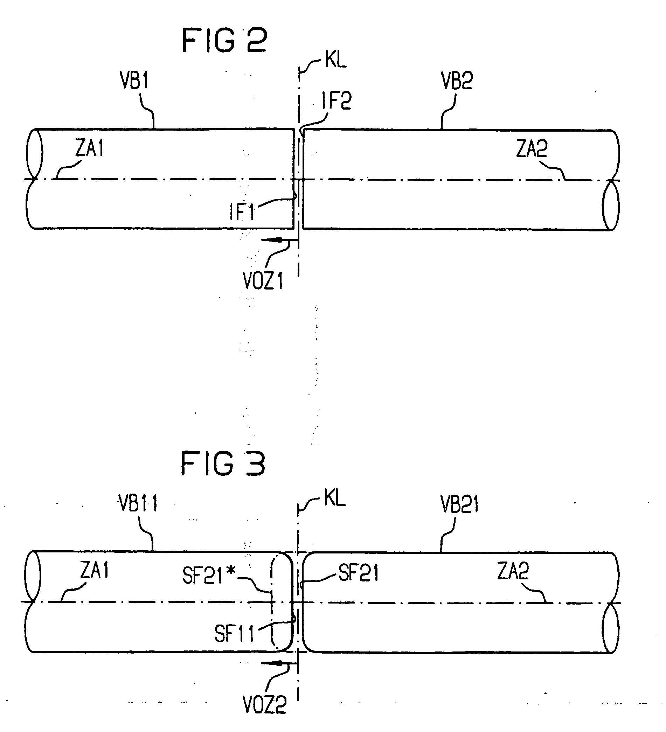

In der Praxis weisen die Faserenden jedoch Stirnflächen mit mehr oder weniger großen Abweichungen genüber dieser gewünschten Soll-Endflächenform IF1 bzw. IF2 auf. Dies veranschaulichen die Figuren 3 mit 5. Dort sind jeweils beispielhaft in der X, Z-Betrachtungsebene schematische Abbildungen der beiden Faserenden FE1, FE2 mit unterschiedlich geformten Stirnflächen, das heißt verschiedenen Stirnflächenqualitäten gezeichnet. Dabei sind in den Figuren 3 mit 5 die beiden Faserenden FE1, FE2 zur besseren Veranschaulichung ihres Faserüberhubes ineinander jeweils in einem ersten Zustand zu Beginn ihres Aufeinanderzubewegens abgebildet, bei dem ihre Stirnflächen noch mit einem Längsabstand gegenüberstehen, sowie strichpunktiert im Endzustand ihrer Ineinanderbewegung.

In der Figur 2 sind zwei sich gegenüberstehende, ideale Faserenden jeweils mit einer weitgehend rechteckförmigen Außenkontur VB1, VB2 in der X,Z- Betrachtungsebene dargestellt. (Die Rechteckform ist in Wirklichkeit natürlich nur die Seitenansicht einer Zylinderform.) Jedes Faserende weist also eine im wesentlichen ideale Stirnfläche IF1 bzw. IF2 auf, die weitgehend plan ausgebildet ist und zu seiner Zentralachse ZA1 bzw. ZA2 etwa einen 90˚-Winkel einschließt.

Demgegenüber sind in der Figur 3 zwei Fasern abgebildet, die räumlich betrachtet jeweils im Übergangsbereich zwischen ihrem kreiszylinderförmigen Außenmantel und ihrer kreisflächenförmigen 90˚- Stirnfläche eine Abrundung aufweisen. Die Abbildungen der derart abgerundeten Fasern sind in der Figur 3 mit VB11, VB21 bezeichnet. Die an ihrem Außenrand abgerundete Stirnfläche der ersten Lichtleitfaser ist in der Figur 3 mit dem Bezugzeichen SF11 sowie entsprechend dazu die abgerundete Stirnfläche der zweiten Faser FE2 mit dem Bezugzeichen SF21 versehen. Die Abbildung der jeweiligen Faser in Figur 3 unterscheidet sich also von ihrer gewünschten, rechteckförmigen Soll-Außenkontur von Figur 2 durch Abrundung ihrer rechteckförmigen Ecken. Die Faserenden von Figur 3 weisen somit gegenüber den idealen Faserenden von Figur 2 an der Stirnseite jeweils ein Materialdefizit auf. Dieses Materialdefizit im Eckbereich des jeweiligen Faserendes kann zum Beispiel durch Verdampfen dessen angeschmolzenen Glasmaterials beim Vorschweißvorgang hervorgerufen werden, das heißt im Zeitraum, bevor und während dem die beiden Faserenden stirnseitig bis zu ihrer Kontaktierungsstelle KL aufeinander zubewegt und dabei dem Lichtbogen ausgesetzt, d.h. thermisch erhitzt werden. Ein solches Materialdefizit lediglich in den Eckbereichen des jeweiligen Faserendes kann insbesondere auch dadurch verursacht sein, daß sich beim Vorschweißen des Faserendes, also noch bevor die beiden Faserenden überhaupt stirnseitig in Kontakt miteinander kommen, bereits ein flüssiger Oberflächenfilm des Glasmaterials der jeweiligen Faser ausbildet. Aufgrund der Oberflächenspannung des geschmolzenen Glasmaterials kann nämlich ein Materialabtransport aus den stirnseitigen Fasereckbereichen heraus stattfinden und dadurch eine Abrundung der Faserstirnfläche eintreten.

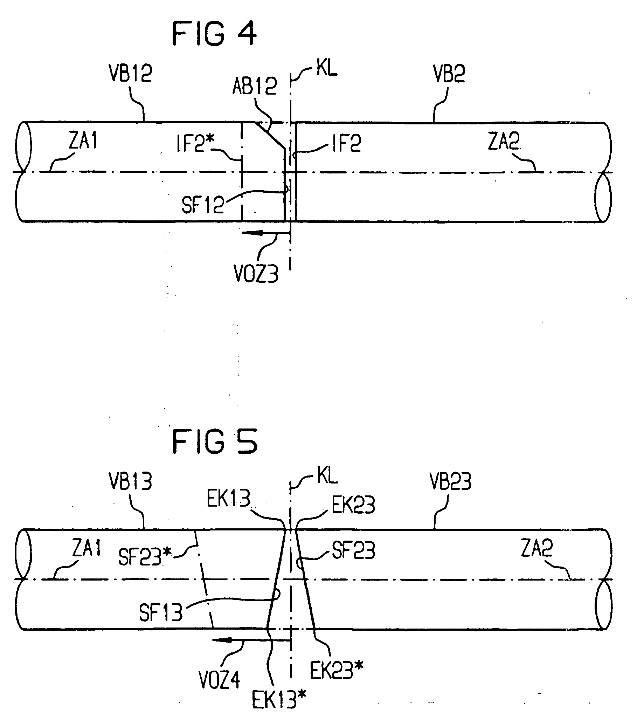

Weiterhin kann es gegebenenfalls auch vorkommen, daß die jeweilige Faser bereits vor Beginn des Vorschweißens an ihrer Stirnseite Materialausbrüche aufweist. In der Figur 4 ist dies beispielsweise für die erste Lichtleitfaser der Fall. Ihre Abbildung VB12 in der X,Z-Beobachtungsebene weist im oberen Eckbereich beim Übergang der in Fluchtrichtung verlaufenden Mantelfläche und dem entlang der Stoßlinie KL verlaufenden Rest ihrer Stirnfläche eine schräg verlaufende Abbruchfläche AB12 auf. Gegenüber der rechteckförmigen Abbildung der ersten Faser von Figur 2 ist also jetzt in Figur 4 ein dreiecksförmiger Glasmaterialteil in der oberen Ecke des ersten Faserendes herausgebrochen. Für die Faseranordnung von Figur 4 sei hier beispielhaft angenommen, daß durch den Materialausbruch an der Stirnseite der ersten Faser ein größeres Materialdefizit wie in Figur 3 zwischen den beiden, sich an der Kontaktierungslinie KL erstmalig berührenden, abgerundeten Fasern entsteht. Dieses Materialdefizit kann beispielsweise dadurch verursacht sein, daß die ursprünglich plan geschnittene 90˚-Stirnfläche der ersten Faser in ihrem Kantenbereich, das heißt in der Übergangszone zwischen dem Kreiszylindermantel und der kreisflächenförmigen Stirnfläche der ersten Faser, beim Einlegen in das Spleißgerät an eine Spleißgeräte- Komponente anstößt und dadurch ein Glasmaterialsplitter ungewollt abgeschlagen wird. In der Figur 4 stehen sich somit entlang der Kontaktierungslinie KL ein erstes Faserende mit einem einseitigen Faserausbruch im oberen Eckbereich seiner Faserstirnfläche sowie ein zweites Faserende mit ideal rechteckförmiger Außenkontur gegenüber.

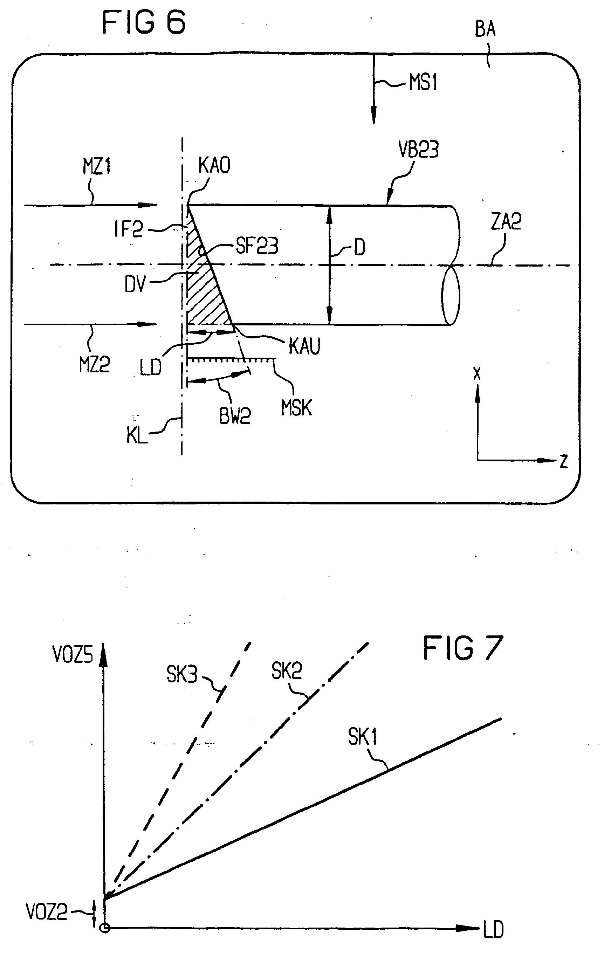

In der Figur 5 weist das Abbild VB13 in der linken Bildhälfte des ersten Faserendes eine plane Stirnfläche SF13 auf, die gegenüber der gewünschten 90˚-Ideal-Endfläche von Figur 2 um einen Fehlerwinkel schiefgestellt ist. Die Faserzentralachse ZA1 bildet somit nicht mehr eine Flächennormale zur schiefgestellten Stirnfläche SF13. In der Bildebene von Figur 5 verläuft die sichtbare Kante der Stirnfläche SF13 (bei Blickrichtung von links nach rechts) von links unten als schräge Geradenlinie nach rechts oben. Dem ersten Faserabbild VB13 von Figur 5 fehlt also gegenüber der ideal rechteckförmigen Projektionsabbildung VB1 von Figur 2 stirnseitig ein dreiecksförmiger Flächenbereich. Auch das Abbild VB23 des zweiten Faserendes FE2 in der rechten Bildhälfte von Figur 5 weist eine etwa plane Stirnfläche SF23 auf, die gegenüber der gewünschten 90˚-Ideal-Endfläche von Figur 2 um einen bestimmten Fehlerwinkel schiefgestellt ist. Die sichtbare Kante der schiefgestellten Stirnfläche SF23 verläuft (bei Blickrichtung von rechts nach links) von rechts unten entlang einer schrägen Geradenlinie nach links oben. Dem zweiten Faserende von Figur 5 fehlt also ebenfalls stirnseitig ein dreiecksförmiger Flächenbereich gegenüber der ideal rechteckförmigen Abbildung VB2 von Figur 2. Die sichtbaren Kanten der Stirnflächen SF13, SF23 laufen somit aufeinander zu und schneiden sich in ihrer gedachten Verlängerung auf der Kontaktierungslinie KL. Dort kommen die beiden Faserenden bei ihrem Aufeinanderzufahren lediglich mit ihren stirnseitigen, oberen Ecken bzw. Abbruchkanten EK13, EK23 erstmalig überhaupt miteinander in Berührung. Denn die Ecken EK13, EK23 stehen von der jeweiligen Faserstirnseite am weitestens in den Zwischenraum zwischen den beiden sich gegenüberstehenden Faserenden vor. Die fehlenden Materialdreiecke an den Stirnseiten der Faserenden FE1 bzw. FE2 weiten sich dabei auf dieselbe Längsseite der Faseranordnung hin auf. Denn die Faserstirnflächen SF13, SF23 verlaufen in der Figur 5 nicht parallel zur Kontaktierungslinie KL in X-Richtung, sondern aufeinander zu. Durch solche schiefgestellten, aufeinander zulaufenden Faserstirnflächen kommt es an der Kontaktierungsstelle der beiden Faserenden zu einem noch größeren Materialdefizit als bei der Faseranordnung nach Figur 4, da zwischen den sich lediglich an einer Ecke kontaktierenden Faserenden ein dreiecksförmiger Spaltbereich verbleibt, dessen Höhe annäherungsweise dem Faserdurchmesser entspricht. Eine schiefe Faserstirnfläche kann insbesondere durch Bruchwinkelfehler beim Abschneiden oder Abtrennen der jeweiligen Lichtleitfaser im Rahmen deren Vorpräparationsmaßnahmen auftreten.

Das Faserpaar von Figur 5 ist auch im Display DP von Figur 1 angezeigt. Allerdings kommen dort die beiden Faserenden noch nicht miteinander in Berührung, sondern sie stehen sich dort mit einem axialen Längsabstand SPO gegenüber.

Zusammenfassend betrachtet wird also für das jeweilige Faserende ein optisches Abbild erzeugt und dessen Bildinformation zur Auswertung bereitgestellt. Aus der Bildinformation des jeweiligen Faserabbilds wird dessen Abweichung gegenüber einer gewünschten Soll-Faserabbildung durch Vergleich ermittelt. Die eigentliche Erfassung der Endflächenqualität der Faserenden erfolgt dabei zweckmäßigerweise vor dem Zusammenfahren bzw. Vorschweißen.

Insbesondere wird für das jeweilige Faserende ein Faserabbild in mindestens einer Betrachtungsebene mit Hilfe des Abbildungssystems nach Figur 1 erzeugt. Gegebenenfalls kann auch zum Beispiel mit Hilfe mindestens eines Okulars oder Objektivs die jeweilige Faserstirnfläche in mindestens einer Seitenansicht mit dem bloßen Auge betrachtet und deren Qualität eingeschätzt bzw. beurteilt werden.

Um ein objektives Maß für den Abweichungsgrad des jeweiligen Faserendes gegenüber der gewünschten Soll-Fasergeometrieform bereitstellen zu können, werden aus der Bildinformation des jeweiligen Faserendes vorzugsweise folgende Abweichungskriterien ermittelt:

1. Als ein erstes Abweichungskriterium, mit dem sich etwaige Unterschiede zwischen der Gestalt des jeweilig vorliegenden Faserendes und der gewünschten Idealgeometrieform in erster Näherung kennzeichnen lassen, kann in mindestens einer Betrachtungsebene der axiale Längsabstand zwischen den stirnseitigen Abbruchkanten des Faserendes auf dessen gegenüberliegenden Längsseiten herangezogen werden. Die Ermittlung dieses Abweichungskriteriums wird beispielhaft anhand der Figur 6 erläutert, die eine vergrößerte Abbildung VB23 des Faserendes FE2 von Figur 5 in der X,Z-Betrachtungsebene zeigt. Dort wird das mit Hilfe der Abbildungsoptik von Figur 1 beleuchtete Faserende FE2 als ein sich geradlinig erstreckender Streifen projiziert, der endseitig schräg angeschnitten ist. Die Faserabbildung weist also endseitig eine trapezförmige Außenkontur auf. Mit anderen Worten heißt das, daß die Längsseiten der streifenförmigen Faserabbildung durch Geradenlinien gebildet sind, die im wesentlichen parallel zur Zentralachse ZA2 verlaufen sowie in radialem Abstand von dieser angeordnet sind. In der Figur 6 liegen die beiden Längsseiten der Faserabbildung bezüglich der Zentralachse ZA2 vorzugsweise achssymmetrisch zueinander. Bezogen auf die gewünschte Soll-Stoßlinie KL ragt die obere Längsseite der Faserabbildung über deren untere Längsseite hinaus. Während sich die Oberkante der Faserabbildung bis zur Stoßlinie KL erstreckt, endet die untere Faserlängskante bereits im axialen Längsabstand LD von der Stoßlinie KL entfernt. Die Oberkante der Stirnseite der Faserabbildung ist in der Figur 6 mit KAO, die Unterkante mit KAU bezeichnet. Die Oberkante KAO ist mit der Unterkante KAU über die schräg verlaufende Geradenlinie SF23 verbunden. Dies ist in der X,Z-Betrachtungsbene die schräg verlaufende, plane Stirnfläche der zweiten- Faser FE2. Dadurch, daß die Oberkante KAO in Richtung auf die Stoßlinie KL weiter als die Unterkante KAU hinausragt, ist ein Überhang gebildet. In der Figur 6 ist der Flächenbereich, der sich als Unterschied zwischen der vorliegenden Faserabbildung und der gewünschten Rechtecksgeometrieform ergibt, schraffiert und mit DV bezeichnet. Dieser Flächenbereich ist in der X,Z-Betrachtungsbene dreiecksförmig ausgebildet. Gegenüber einer idealen Faserabbildung mit Rechtecksform, bei der die Stirnfläche im wesentlichen parallel zur Kontaktierungslinie KL in X-Richtung verläuft, ist somit die Stirnfläche SF23 um einen Fehlerwinkel BW2 geneigt. Die plane Faserstirnfläche SF23 steht also gegenüber der gewünschten 90˚-Ideal-Endfläche IF2 um den Fehlerwinkel BW2 schief. Der axiale Längsabstand LD zwischen der oberen und unteren Abbruchkante KAO, KAU an der Stirnseite der Faserabbildung kann als besonders einfaches Klassifizierungsmaß bzw. -kriterium für die Abweichung zwischen vorliegender und gewünschter Fasergeometrieform in der X,Z-Betrachtungsbene dienen. Je größer der axiale Längsabstand LD zwischen den Abbruchkanten KAO, KAU auf gegenüberliegenden Längsseiten der Faserabbildung wird, desto größer wird das Materialdefizit gegenüber einer ideal rechteckfömigen Außenkontur. Sind beide Abbruchkanten KAO, KAU dem selben Faserlängsort zugeordnet, so ergibt sich ein axialer Längsabstand LD von annäherungsweise Null, d.h. die Faserstirnfläche verläuft im wesentlichen parallel zur Kontaktierungslinie KL und bildet damit eine gewünschte 90˚-Endfläche. Ein stirnseitiges Materialdefizit ist dann für eine solche Faser nicht vorhanden.

Der axiale Längsabstand LD zwischen den stirnseitigen Faserabbruchkanten kann beispielsweise dadurch bestimmt werden, daß die Helligkeitswerte der in der Speichereinrichtung VA von Figur 1 abgelegten Faserabbildung mit Hilfe der Recheneinheit CPU ausgewertet werden. Dort wo die Abbruchkanten der Faser liegen, ergibt sich nämlich ein Wechsel in der Helligkeit der aufgenommenen Intensitätswerte.

Mit Hilfe der jeweiligen Abtasteinrichtung wie z. B. VKY von Figur 1 wird in der zugehörigen Betrachtungsebene wie z.B. der X,Z-Abbildungsebene vorzugsweise jeweils ein rechteckförmiger Bildausschnitt erfaßt. In der Figur 6 ist der rechteckförmige Bildausschnitt, der von der Abtasteinrichtung VKY von Figur 1 erfaßt wird, mit eingezeichnet und mit BA bezeichnet. Da das zweite Faserende FE2 im Strahlengang der Lichtstrahlen LIY eine Abschattung bewirkt, wird es im Bildausschnitt BA gegenüber einem hellen Hintergrund als dunklerer Schatten abgebildet. Wird der Bildausschnitt BA beispielsweise zeilenweise in Faserlängsrichtung, d.h. hier in Z-Richtung abgetastet, so kann zunächst in der leeren, oberen Bildhälfte beim Durchlaufen der Pixel der jeweiligen Meßzeile in Z- Richtung keine signifikante, über mehrere Pixelwerte andauernde Helligkeitsveränderung bis auf statistische Schwankungen registriert werden. Erst in derjenigen Meßzeile MZ1 in z-Richtung, auf deren Pixel bzw. Meßzellen die Oberkante des zweiten Faserendes FE2 abgebildet wird, wechseln die Intensitätswerte der Pixel ab der Position der vorderen Faser- Abbruchkante KAO von hell nach dunkel und bleiben dann auch entlang der übrigen Faserlängserstreckung dunkel. Die Meßzeile MZ1 weist also vom linken Rand des Bildausschnitts BA bis zur vorderen Abbruchkante KAO der Faserabbildung höhere Intenssitätswerte als entlang ihrer restlichen Längserstreckung ab der Abbruchkante KAO bis zum rechten Bildrand auf. Demjenigen Pixel der Meßzeile MZ1, ab dem der Helligkeitswechsel eintritt, kann dann ein bestimmter Z-Längsort zugeordnet werden. Beim weiteren zeilenweisen Durchrastern des Bildausschnitts BA wird schließlich auch diejenige Meßzeile MZ2 in Z-Richtung gefunden, in der letzternals ein Wechsel der Helligkeitswerte über mehrere Pixel hinweg von hell nach dunkel auftritt. Nach der Meßzeile MZ2 tritt schließlich in den nachfolgenden Bildzeilen der leeren, unteren Bildhälfte kein Helligkeitswechsel mehr auf. In der Meßzeile MZ2 kann demjenigen Bildpixel, ab dem der Intensitätsunterschied auftritt, ebenfalls ein bestimmter Z-Längsort zugeordnet werden. Dies ist dann der Längsort der unteren Abbruchkante KAU der Faserabbildung. Auf diese Weise kann durch Differenzbildung der Z-Längsorte für die obere und untere Bandkante ein etwaiger axialer Versatz, d.h. ihr axialer Längsabstand relativ zueinander ermittelt werden. Je größer der axiale Längsabstand LD der Faserabbruchkanten auf gegenüberliegenden Faserlängsseiten wird, desto schiefer steht die Stirnfläche SF23 gegenüber der gewünschten 90˚-Stirnfläche SF23 und desto schlechter ist die Stirnflächenqualität der Faser FE2. Ist hingegen kein axialer Längsabstand LD zwischen den beiden Abbruchkanten KAO, KAU feststellbar, so kann die Stirnflächenqualität als in Ordnung gewertet werden. Bei diesem Meßverfahren genügt es dabei, lediglich festzustellen, wie weit die Abbruchkanten KAO, KAU in axialer Richtung relativ zueinander versetzt sind. Der relative Längsunterschied LD läßt sich also in einfacher Weise dadurch bestimmen, daß die Differenz derjenigen Pixelnummern gebildet wird, bei denen jeweils erstmalig sowie letztmalig ein Hell-Dunkel-Wechsel in den Meßzeilen auftritt. Je größer also die Anzahl der Pixelwerte zwischen dem Längsort der oberen Abbruchkante KAO und der unteren Abbruchkante KAU ist, desto stärker ist die Stirnfläche SF23 gegenüber der 90˚-Idealstirnfläche IF2 geneigt.

Auf diese Weise ist es ermöglicht, einen etwaigen Relativlageversatz der beiden Faserabbruchkanten KAO,KAU gegeneinander festzustellen und zu ermitteln. Dies kann vorzugsweise mit Hilfe der Recheneinheit CPU von Figur 1 automatisch erfolgen, indem diese die in der Speichereinrichtung VA abgelegten Faserabbildungen entsprechend obigem Prinzip untersucht.

Gegebenenfalls kann es auch ausreichend sein, einen etwaigen Längenversatz der Abbruchkanten vom Benutzer mit dem bloßen Auge aus dem im Display DP angezeigten Faserabbild ablesen zu lassen. Dazu kann es zweckmäßig sein, die Soll- Stoßlinie KL in X-Richtung als Markierungsstrich auf dem Display DP vorzusehen. Das jeweilige Faserende kann dann durch Betätigen der entsprechenden Manipulatoren in Z-Richtung soweit verschoben werden, bis die Faserstirnfläche erstmals mit der Stoßlinie KL in Berührung kommt. Um nun den axialen Längsabstand zwischen der oberen und unteren Abbruchkante der Stirnfläche des jeweiligen Faserendes ermitteln, insbesondere quantifizieren zu können, kann es zweckmäßig sein, auf dem Display DP zusätzlich in Z-Richtung eine Längenskala anzubringen. Deren Nullpunkt liegt vorzugsweise auf der Stoßlinie KL. In der Figur 6 ist beispielhaft eine solche Meßskala MSK zusätzlich miteingezeichnet.

2. Als ein weiteres Abweichungskriterium kann gegebenenfalls auch der Fehlerwinkel herangezogen werden, um den die Stirnfläche des jeweiligen Faserendes gegenüber der gewünschten Soll-Endfläche schiefsteht. In der Figur 6 ist die Stirnfläche SF23 der Faserabbildung gegenüber der gewünschten 90˚-Stirnfläche IF2 und damit auch gegenüber der Soll-Kontaktierungslinie KL um den Fehlerwinkel BW2 geneigt. Der Fehlerwinkel BW2 ergibt sich dabei in einfacher Weise annäherungsweise nach der Beziehung BW2 = arctan(LD/D), wobei D die Breite des Schattenbildes in X-Richtung ist, d.h. dem Außendurchmesser der Faser FE2 entspricht, und LD der axiale Längsabstand zwischen der oberen und unteren Abbruchkante KAO, KAU des Faserabbildes VB23 ist.

Die Breite D des Schattenbildes VB23 läßt sich in einfacher Weise durch Abzählen derjenigen Pixel ermitteln, die zwischen der Meßzeile MZ1 und der Meßzeile MZ2 in X-Richtung liegen. Gegebenenfalls kann es auch zweckmäßig sein, einen Scan in X-Richtung über die gesamte Bildhöhe durchzuführen, d.h. den Bildausschnitt BA entlang einer Meßspalte MS1 abzutasten, die sowohl die obere als auch die untere Längsseite der in Figur 6 waagrechten Faserabbildung VB23 erfaßt. Derjenige Spaltenort, an dem die Intensitätswerte der Meßspalte MS1 von hell nach dunkel wechseln sowie dasjenige Spaltenpixel, bei dem die Intensitätswerte der Meßspalte MS1 wieder von dunkel nach hell wechseln, geben dann die Ränder der Faserabbildung in X-Richtung betrachtet an. Die Differenz zwischen diesen beiden Rändern in X-Richtung betrachtet ergibt dann die Breite D, d.h. den Außendurchmesser der Faserabbildung VB23. Je größer der Fehlerwinkel BW2 wird, desto größer wird das stirnseitige Materialdefizit und desto schlechter ist die Stirnflächenqualität der Faser FE2.

3. Als weiteres, bevorzugtes Abweichungskriterium kann dasjenige Materialdefizit bestimmt werden, das dem jeweiligen Faserende gegenüber einem Faserende mit gewünschter Soll-Endfläche fehlt. In der Figur 6 kennzeichnet die schraffierte dreiecksförmige Fläche DV denjenigen Bereich, Faserende FE2 Glasmaterial gegenüber der gewünschten rechteckförmigen Geometrieform IF2 eines idealen Faserendes fehlt. Unter der Annahme, daß ein ideales Faserende kreiszylinderförmig ausgebildet ist, fehlt dem Faserende FE2 von Figur 6 im Dreiecksbereich DV räumlich betrachtet ein Materialvolumen V = (LD $\pi$ D$^2$)/8, wobei LD die Längendifferenz zwischen den abgebildeten Abbruchkanten KAO, KAU, sowie D der abgebildete Faseraußendurchmesser ist.

4. Als weiteres Abweichungskriterium vom Idealzustand kann schließlich auch im jeweiligen Faserabbild die Differenzfläche herangezogen werden, die dem aktuell vorliegenden Faserabbild gegenüber der gewünschten Soll-Rechtecksfläche in der jeweiligen Betrachtungsebene fehlt. In der Figur 6 berechnet sich die dreiecksförmige Differenzfläche DV, die dem aktuell vorliegenden Faserabbild gegenüber der rechteckförmigen Idealabbildung fehlt, annäherungsweise nach folgender Beziehung:

$$DV = 1/2\ D\ LD$$

Ein Maß für die Differenzfläche kann vorzugsweise auch dadurch gewonnen werden, daß die Anzahl der Pixel hoher Helligkeit im Spaltraum zwischen den beiden an der Soll-Stoßlinie KL gerade einander berührenden Faserenden bestimmt wird. Je größer die Pixelanzahl im hellen Spaltraum ist, der von den Lichtstrahlen durchdrungen wird, desto größer ist das Materialdfizit der Faserenden gegenüber dem Idealzustand, bei dem sich die Stirnflächen idealerweise entlang der Kontaktierungslinie KL vollständig, d.h. in X- Richtung entlang dem gesamten Faserdurchmesser berühren.

Gegebenenfalls kann es auch zweckmäßig sein, für das jeweilige Faserende allein, diejenige Pixelanzahl zu bestimmen, die in der Materialdefizitfläche liegt. Dazu wird das jeweilige Faserende - wie z. B. FE2 in der Figur 6 - vorzugsweise soweit in Z-Richtung verschoben, daß seine Stirnfläche erstmalig mit der Kontaktierungslinie KL in Berührung kommt. Dann können die Pixel bzw. Bildpunkte zahlenmäßig zusammengezählt werden, die etwaig zwischen der Kontaktierungslinie KL und der Faserstirnfläche wie z. B. SF23 liegen und gegenüber dem Schattenbild hellere Intensitätswerte aufweisen. Ihre Summe gibt dann ein zuverlässiges Maß für die Größe der Fehlfläche an der Stirnseite des Faserendes an. Genauso kann es zweckmäßig sein, die Intensitätswerte dieser Pixel im Fehlbereich zusammenzuaddieren. Je größer der Intensitätswert wird, desto größer ist die Abweichung des vorliegenden Faserendes vom Idealzustand.

5. Besonders zweckmäßig kann es sein, ein etwaiges Materialdefizit im Zwischenraum zwischen den beiden Faserenden FE1, FE2 insgesamt zu ermitteln. Dies kann vorzugsweise auch bereits dann erfolgen, wenn die beiden Faserenden noch nicht bei der gedachten Soll- Stoßlinie KL einander berühren, sondern mit axialem Längsabstand voneinander positioniert sind. Im Display DP von Figur 1 stehen sich die beiden Abbildungen VB13, VB23 der Fasern FE1, FE2 entlang ihren oberen Längsseiten betrachtet mit einem axialen Längsabstand SPO gegenüber, d.h. ihre beiden, am weitesten aufeinander zu springenden Faserstirnecken EK13, EK23 liegen im axialen Längsabstand SPO voneinander. Diese minimale Spaltbreite (in Z- Richtung betrachtet) des trapezförmigen Spalt-Zwischenraums zwischen den beiden Faserabbildungen VB13, VB23 wird in einem ersten Meßschritt ermittelt. Entsprechend dazu wird in einem zweiten Meßschritt die maximale Spaltbreite SPU zwischen den beiden Faserabbildungen VB13, VB23 ermittelt. Dies ist der axiale Längsabstand der beiden Abbildungen VB13, VB23 entlang ihren unteren Längsseiten, d.h. die beiden, am weitesten voneinander entfernten Faserstirnecken EK13*, EK23* liegen im axialen Längsabstand SPU voneinander. Der Differenzbetrag zwischen der maximalen und minimalen Spaltbreite (=SPU-SPO) bildet dann ein Maß dafür, wieviel Glasmaterial insgesamt für beide Fasern zusammen betrachtet gegenüber der strichpunktiert eingezeichneten Idealabbildung der Fasern mit rechteckförmiger Außenkontur IF1, IF2 (bei gleicher Positionierung), d.h. räumlich betrachtet kreiszylinderförmiger Geometrieform, fehlt.

Für eine solche Faseranordnung zweier sich mit Längsabstand gegenüberstehender Faserenden läßt sich in der Praxis ein Gesamt- Abweichungskriterium von der Idealanordnung besonders einfach dadurch ermitteln, daß die gegenüberliegenden Längsseiten der Faserabbildungen VB13, VB23 mit je einer Meßzeile in Z-Richtung abgetastet werden und in diesen Meßzeilen jeweils die Anzahl der Pixel bzw. Bildpunkte gezählt wird, die im trapezförmigen Spaltraum zwischen den beiden Faserenden heller als die Faserschattenbilder VB13, VB23 erscheinen. Die Pixelanzahl, d.h. Anzahl der lichtempfindlichen Elemente bzw. Meßzellen des Bildsensors z.B. in der Meßzeile MZ1 (vgl. Figuren 1, 5, 6) zwischen den oberen Faserstirnecken EK13, EK23 ist dann ein Maß für die minimale Spaltbreite SPO; die Pixelanzahl in der Meßzeile zwischen den beiden unteren Faserstirnecken EK13*, EK23* auf der gegenüberliegende Längsseite der Faseranordnung ist ein Maß für deren maximale Spaltbreite SPU. Die Differenz zwischen diesen beiden Pixelsummen bildet somit ein brauchbares Kriterium zur Beurteilung, wie groß das Materialdefizit der gesamten Faseranordnung durch Formabweichungen einer oder beider miteinander zu verschweißender Faserenden von ihrer Soll-Geometrieform ist.

Würde die zweite Faser FE2 eine Stirnfläche aufweisen, die etwa parallel zur Stirnfläche der ersten Faser FE1 verläuft, so würde sich nach obiger Vorgehensweise ein Differenzwert von etwa Null als Längenunterschied zwischen den Spaltbreiten des Spalts auf zwei sich gegenüberliegenden Längsseiten der Faserabbildungen ergeben. In der Figur 1 ist im Display DP beispielhaft für die zweite Faserabbildung VB23 in der X,Z-Ebene eine strichpunktierte Stirnfläche SF23** eingezeichnet, die annäherungsweise parallel zur Stirnfläche SF13 der ersten Faser verläuft. Bei einer solchen Faseranordnung würde nämlich gerade keine Materiallücke entstehen, da diese Fasern stirnseitig vollflächig miteinander in Kontakt kommen.

Verallgemeinert betrachtet wird also in der jeweiligen Betrachtungsebene entlang mindestens zweier Meßzeilen, die bezüglich der Faserzentralachsen gegeneinander lateral versetzt sind, jeweils die Spaltbreite eines sich ergebenden Spaltes zwischen deren Faserstirnflächen in Faserlängsrichtung vermessen. Dann wird das Differenzsignal dieser beiden ermittelten Spaltbreiten gebildet, so daß eine definierte Meßgröße zur Quantifizierung des Materialdefizits der Faseranordnung gegenüber deren gewünschter Soll- Raumform zur Verfügung steht.

Mindestens ein solches Abweichungskriterium wird für das jeweilige Faserende in mindestens einer Betrachtungsebene ermittelt. Auch können ggf. mehrere Abweichungskriterien gleichzeitig zur Beurteilung der Endflächenqualität des jeweiligen Faserendes verwendet werden.

Auf diese Weise steht mindestens ein Abweichungskriterium zur Verfügung, mit dem sich eine etwaige Abweichung zwischen dem aktuell vorliegenden Faserabbild und der gewünschten FaserGeometrieform klassifizieren bzw. bewerten läßt.

Aufgrund mindestens eines dieser Abweichungskriterien wird nun der Vorschubweg für das Ineinanderschieben der angeschmolzenen Faserenden ineinander gesteuert. Mit anderen Worten heißt das, daß die zwei miteinander zu verschweißenden, angeschmolzenen Faserenden über ihre stirnseitige Kontaktierungsstelle hinaus umso mehr in Faserlängsrichtung ineinander geschoben werden, je schlechter ihre Stirnflächenqualität ist. In der Figur 1 weist die Recheneinheit CPU in Abhängigkeit zum Abweichungskriterium das Stellglied PO an, die Positioniereinrichtung SGZ mit der zweiten Faser FE2 in Z-Richtung über die Kontaktierungslinie KL hinaus in die Glasschmelze der ersten Faser FE1 hinein zu verfahren. Während das geschmolzene Glasmaterial der Faserenden über die Kontaktierungslinie KL von Figur 1 hinaus ineinandergeschoben wird, bleiben die Faserenden dabei dem Lichtbogen ausgesetzt, d.h. sie werden thermisch mindestens auf Schmelztemperatur gebracht. Nach dem Ineinanderschieben der geschmolzenen Faserenden werden diese solange auf Schmelztemperatur gehalten, bis sich eine weitgehend homogene Schweißverbindung zwischen ihnen ausgebildet hat.

Zusammenfassend betrachtet, wird also der Vorschubweg der beiden, sich stirnseitig berührenden Faserenden über ihre Kontaktierungsstelle hinaus um so größer gewählt, je größer der Grad der Abweichung ihrer Stirnflächen vom Idealzustand ist. Diese fein abgestufte Wahl des Faserüberhubweges beim Zusammenschieben der geschmolzenen Faserenden ineinander über ihre stirnseitige Erstkontaktierungsstelle hinaus und zwar in Abhängigkeit von ihrer Stirnflächenqualität veranschaulichen beispielhaft die Figuren 2 mit 5.

In der Figur 2 sind die idealen Stirnflächen IF1, IF2 der beiden abgebildeten Faserenden VB1, VB2 als Geradenlinien sichtbar, die parallel zur Soll-Stoßlinie KL in X-Richtung verlaufen. Da die beiden Faserenden FE1, FE2 von Figur 2 planflächige Stirnflächen aufweisen, die im 90˚-Winkel zu ihren Zentralachsen ZA1 bzw. ZA2 liegen, kommen sie an der Kontaktierungslinie KL erstmals vollflächig in Berührung. Zur Herstellung einer einwandfreien Schweißverbindung zwischen den beiden Faserenden FE1,FE2, d.h. für eine ausreichende Verschmelzung der beiden Faserenden FE1,FE2 miteinander, reicht es in diesem theoretischen Idealfall bereits aus, ihr stirnseitig geschmolzenes Material lediglich zur Berührung zu bringen. Der Vorschubweg VOZ1 ist dann ausnahmsweise gleich Null. Somit kommt es noch zu keiner Aufdickung an der Schweißverbindungsstelle der beiden Fasern FE1,FE2. Die Schweißverbindung zwischen den beiden Fasern FE1,FE2 weist dann im wesentlichen dieselbe Geometrieform wie die beiden Fasern FE1,FE2 entlang ihrer sonstigen Längserstreckung auf. Mit anderen Worten heißt das, daß die ursprüngliche Faserquerschnittsgeometrie über die Schweißverbindungsstelle hinweg durchgehend erhalten bleibt. Im Glasmaterialinneren verlaufen somit die aneinandergeschweißten Faserkerne der beiden Fasern FE1,FE2 im wesentlichen entlang einer gemeinsamen Fluchtlinie in Z-Richtung. Die miteinander verschweißten Glasmäntel der beiden Fasern FE1,FE2 weisen dabei einen Außendurchmesser auf, der dem ursprünglichen Faseraußendurchmesser entspricht.

Gegenüber den beiden Faserenden von Figur 2 mit weitgehend ideal geformten Stirnflächen weisen die beiden miteinander zu verschweißenden Fasern von Figur 3 abgerundete Stirnflächen SF11, SF21 auf. Dieser Fall tritt in der Praxis aufgrund des Vorschweißens regelmäßig ein. Kommen diese beiden abgerundeten Stirnflächen SF11,SF21 an der Kontaktierungsstelle KL erstmalig in Berührung miteinander, so verbleibt dort am Außenumfang ein Ringspalt. Dieser Ringspalt ist in der Betrachtungsebene von Figur 3 annäherungsweise trichterförmig ausgebildet. Er ragt nur entlang einer Teillänge der radialen Faserdicke ins Faserinnere hinein. Im Unterschied zu den Faserenden von Figur 2 kommen die Faserenden von Figur 3 bei der Kontaktierungslinie KL nur noch in einem Bereich um das Faserzentrum zusammen, während sie sich am Außenrand ihrer Stirnflächen nicht mehr kontaktieren. Durch diesen Ringspalt verbleibt ein Materialdefizit zwischen den Faserenden. Die beiden angeschmolzenen Faserenden werden deshalb zumindest soweit ineinander gefahren, daß dieses Materialdefizit ausgeglichen wird. Das stirnseitig geschmolzene Glasmaterial der beiden Faserenden von Figur 3 wird deshalb gegenüber Figur 2 um einen vergrößerten Vorschubweg VOZ2 über die Kontaktierungslinie KL hinaus ineinander geschoben, um die Materiallücke im Ringspalt durch entsprechenden Materialnachschub möglichst ausgleichen und schließen zu können. Das Eindringen der geschmolzenen Stirnseite der zweiten Faser FE2 in das geschmolzene Glasmaterial der Stirnseite des ersten Faserendes FE1 ist in der Figur 3 dadurch kenntlich gemacht, daß der Stirnflächenverlauf des zweiten Faserendes FE2 nach Durchführung der Vorschubbewegung strichpunktiert eingezeichnet und mit SF21* bezeichnet ist. Da das Materialdefizit durch Materialverdampfung im wesentlichen von der eingestellten Fasererwärmung beeinflußt wird, die Fasererwärmung bei der Herstellung von Faser-Schweißverbindungen in der Praxis aber stets annäherungsweise dieselbe ist, kann dieser Materialdefizit-Anteil vereinfacht betrachtet als konstant angesehen werden. Er kann folglich durch einen konstanten, additiven Anteil des Faserüberhubes berücksichtigt werden. Er braucht somit nicht für jede einzelne, neu herzustellende Faser-Schweißverbindung erneut ermittelt zu werden.

In der Figur 4 weist das erste Faserende an seiner Oberkante einen Materialausbruch AB12 auf, für den angenommen ist, daß er im Kontaktierungsbereich der beiden Faserstirnflächen SF12, IF2 gegenüber der Faseranordnung von Figur 3 zu einem noch größeren Materialdefizit führt. Zum Ausgleich dieses Materialdefizits wird das stirnseitig geschmolzene Glasmaterial des zweiten Faserendes FE2 um einen noch größeren Vorschubweg VOZ3>VOZ2 über die Kontaktierungslinie KL hinaus in das stirnseitig geschmolzene Glasmaterial des ersten Faserendes FE1 hinein verfahren. Das Vorrücken des zweiten Faserendes FE2 um den Vorschubweg VOZ3 in das stirnseitig geschmolzene Faserende FE1 hinein ist in der Figur 4 dadurch veranschaulicht, daß für das zweite Faserende FE2 der Endverlauf dessen Stirnfläche im Abbild VB12 der ersten Faser strichpunktiert eingezeichnet und mit IF2* bezeichnet ist.

Weisen beide Faserenden wie in Figur 5 gar schiefgestellte Stirnflächen auf, die aufeinander zulaufen, so kommt es bei der Soll- Kontaktierungslinie KL lediglich an einer einzigen Stelle zur erstmaligen Berührung der Faserstirnflächen. Dies sind diejenigen Abbruchkanten, die in Faserlängsrichtung betrachtet am weitesten in Richtung auf die Kontaktierungsstellen KL vorragen. Dadurch ist ein gegenüber Figur 4 noch weiter vergrößerter Spaltraum zwischen den sich erstmalig berührenden Faserstirnflächen gebildet. In der Figur 5 ist dieser Spaltraum dreiecksförmig ausgebildet. Er erstreckt sich über nahezu die gesamte Länge des Faserdurchmessers. Da die beiden Faserenden von Figur 5 noch stärker von der gewünschten Fasergeometrieform als in Figur 4 abweichen, werden sie um einen noch größeren Vorschubweg über ihre Kontaktierungslinie KL hinaus ineinandergeschoben. Bei Verwendung der Schweißeinrichtung SE von Figur 1 wird das Faserende FE2 um den Vorschubweg VOZ4> VOZ3 >VOZ2 > VOZ1 in das stirnseitig geschmolzene Glasmaterial des ersten Faserendes FE1 hineingefahren. Der Verlauf der Faserstirnfläche des zweiten Faserendes nach Durchführung dieser Vorschubbewegung ist in der Figur 5 strichpunktiert eingezeichnet und mit SF23* bezeichnet.

Bei abgerundeten Faserenden wird der Vorschubweg mindestens gleich 0,3 $\mu$m, insbesondere zwischen 1 und 5 $\mu$m gewählt. Treten Faserausbrüche bzw. Materialabsplitterungen an den Faserenden auf, wie in Figur 4, so wird der Vorschubweg vorzugsweise mindestens 1 $\mu$m, insbesondere zwischen 1 $\mu$m und 10 $\mu$m gewählt. Weisen die Faserstirnflächen Bruchwinkelfehler auf, wie z.B. in Figur 5, so wird der Vorschubweg mindestens gleich 1 $\mu$m, insbesondere zwischen 1 und 30 $\mu$m gewählt.

Die Gesamt- Eindringtiefe der stirnseitig geschmolzenen Faserenden ineinander wird in der Praxis bevorzugt derart gewählt, daß zumindest dasjenige Materialdefizit, daß die vorliegenden Faserenden insgesamt, d.h. zusammengenommen, gegenüber ihrer Soll-Fasergeometrieform aufweisen, ausgeglichen wird.

Die Weglänge für den Faserüberhub ineinander läßt sich insbesondere auch in Abhängigkeit von der sich etwaig ergebenden Spaltfläche zwischen den noch mit Längsabstand gegenüberliegenden Faserenden steuern. Dabei kann die Spaltvermessung vor Beginn oder während der Zusammenfahrbewegung der Faserenden erfolgen. Bevorzugt wird die Spaltfläche beim erstmaligen Kontaktieren der Faserenden in der jeweiligen Betrachtungsebene ermittelt. Dazu werden die Faserenden soweit in Z-Richtung aufeinander zugefahren, daß sich ihre Stirnseiten an der Soll-Kontaktierungslinie KL annähernd berühren. Verbleibt zwischen den beiden Stirnflächen ein Zwischenraum, so wird dieser von den Lichtstrahlen durchdrungen. Er erscheint deshalb in der jeweiligen Betrachtungsebene heller als die Faserenden. Die Spaltgröße kann deshalb in einfacher Weise dadurch bestimmt werden, daß die Anzahl der Pixel bzw. Bildpunkte zwischen den beiden Faserenden gezählt wird, die größere Intensitätswerte als die von den Faserabbildungen erfaßten Bildpunkte aufweisen, d.h. heller als die von den Faserprojektionen getroffenen Bildpunkte sind. Je größer die Anzahl der Pixel mit größerer Helligkeit im Zwischenraum zwischen den beiden Faserenden ist, desto größer ist die Materialdefizitfläche zwischen den beiden Faserenden und desto größer wird deren Vorschubweg gewählt.

Besonders zweckmäßig kann es sein, das Volumen des Materialdefizits der jeweilig vorliegenden Fasergeometrieform gegenüber der gewünschten Sollgeometrieform als Eingangsgröße zur Berechnung des Faser- Vorschubweges zu verwenden. Vereinfachend kann der Faser- Vorschubweg proportional zum Volumen des Materialdefizits gesteuert werden. Insbesondere kann der Vorschubweg, der jeweils vorwärtsbewegten Faser derart eingestellt werden, daß der Vorschub ihres nachgeschobenen Materialvolumes ausreicht, ihr Materialdefizit auszugleichen. Wird lediglich - wie in Figur 1 - das zweite Faserende auf das feststehende, erste Faserende FE1 zugeschoben, so wird ihr Gesamtverfahrweg VOZ derart gewählt, daß das auf die erste Faser zu nachgeschobene Glasmaterial der zweiten Faser zum Ausgleichs des Gesamtmaterialdefizits beider Faserenden ausreicht. Werden beide Fasern gleichzeitig aufeinander zubewegt, so wird ihr einzelner Vorschubweg derart eingestellt, daß jede Faser anteilig je nach ihrem Materialdefizit zum Materialausgleich des Spalts zwischen den beiden sich gegenüberstehenden Stirnflächen beiträgt.

Figur 7 zeigt beispielhaft verschiedene Steuerkennlinien für die Vorschubbewegung eines einzelnen Faserendes - wie z.B. des zweiten Faserendes VB23 von Figur 6 - für den Fall, daß lediglich deren eigenes, stirnseitiges Materialdefizit zumindest kompensiert, d.h. ergänzt wird. Es ist also dabei angenommen, daß die zugehörige erste Faser eine ideale 90°-Stirnfläche aufweist, während die Stirnfläche der zweiten Faser wie in Figur 5, 6 dargestellt, schiefgestellt ist. Entlang der Abszisse des Kennliniendiagramms von Figur 7 ist als Abweichungskriterium der axiale Längsabstand LD der Abbruchkanten KAO, KAU der Faserstirnfläche SF23 von Figur 6 aufgetragen, während die Ordinaten des Diagramms der Faserüberhubweg VOZ5 zugeordnet ist. Die mit einer Steigung von 0,5 verlaufende Geradenlinie SK1 ist die Steuerkennlinie für denjenigen Überhubweg, der gerade einen Materialausgleich ermöglicht. Die Steuerkennlinie SK1 ergibt sich aus folgender einfachen Überlegung:

Dem Faserende von Figur 6 fehlt als Materialvolumen V1 die Hälfte eines Kreiszylinders mit dem Durchmesser D und der Höhe LD. Es gilt also $V1 = 1/8 (\pi D^2) LD$. Der Ausgleich dieses Materialdefizits kann dann durch Nachschieben von geschmolzenem Glasmaterial eines vollzylindrischen Faserabschnitts entsprechend großer Länge VOZ5 erfolgen, wobei für dessen Materialvolumen V2 gilt: $V2 = \frac{1}{4} (\pi D^2) VOZ5$ Zum Ausgleich der in der Praxis stets auftretenden Verrundung (Figur 3) der Faserstirnseiten wird unabhängig von LD ein konstanter Vorschubanteil VOZ2 spendiert. Wird also das fehlende Materialvolumen dem nachgeschobenen Materialvolumen gleichgesetzt, so ergibt sich die lineare Beziehung VOZ5= 0,5 LD + VOZ2, d.h. die Steuerkennlinie SK1 von Figur 7.

Gegenüber der Steuerkennlinie SK1 ermöglicht es die zusätzlich strichpunktiert eingezeichnete Steuerkennlinie SK2, eine Überkompensation zur Auffüllung des Materialdefizits durch einen entsprechend vergrößerten Vorschubweg sicherzustellen. Die noch steilere, gestrichelt gezeichnete Geradenlinie SK3 gleicht schließlich das Materialdefizit überproportional aus.

Mindestens eine solche Steuerkennlinie wird zweckmäßigerweise in der Rechen- und Steuereinrichtung CPU von Figur 1 als Funktion oder tabellarisch implementiert. Zur Herstellung der jeweiligen Schweißverbindung, d.h. für jedes neue Paar von Faserenden, die miteinander verschweißt werden sollen, wird z.B. mit Hilfe der Schweißeinrichtung von Figur 1 in mindestens einer Betrachtungsebene Faserabbildungen erzeugt. Aus deren Bildinformation wird dann mindestens ein Abweichungskriterium - wie z.B. LD - für jede Faser für sich oder für die gesamte Faseranordnung, d.h. für beide Faserenden gemeinsam, ermittelt. Dieses Abweichungskriterium dient dann als Eingangsparameter für die entsprechende Steuerkennlinie, die als Ausgangsparameter den entsprechenden Faserüberhubweg liefert. Selbstverständlich kann es auch zweckmäßig sein, dem Spleißgerätebenutzer die Steuerkennlinien als Funktionenkurven oder Tabellen in Papierform zur Verfügung zu stellen, so daß dieser von Hand den jeweilig erforderlichen Überhubweg am Spleißgerät einstellen kann.

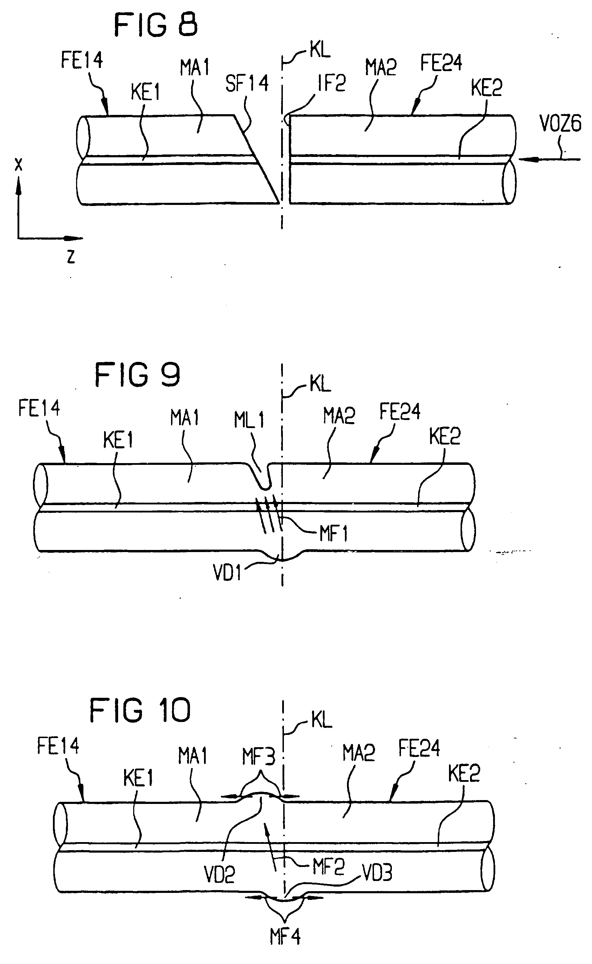

Figur 8 zeigt in schematischer sowie vergrößerter Darstellung eine Projektionsebene mit den optischen Abbildungen zweier weiterer, erfindungsgemäß miteinander zu verschweißender Faserenden FE14, FE24. Vorzugsweise gibt Figur 8 die X,Z-Betrachtungsebene von Figur 1 wieder. In der Bildebene von Figur 8 stehen sich an der Soll-Stoßlinie KL das erste Faserende FE14 jetzt mit einer schiefgestellten Stirnfläche SF14 sowie das zweite Faserende FE24 mit einer planflächigen, 90˚-Stirnfläche IF2 gegenüber. Zusätzlich zur Außenkontur der Faserprojektionen ist in der Figur 8 der Verlauf der Faserkerne der ersten sowie zweiten Faser mit eingezeichnet. Der Faserkern KE1 der ersten Faser FE14 verläuft im wesentlichen zentrisch in dieser. Entsprechendes gilt für den Verlauf des Faserkerns KE2 der zweiten Faser FE2. Die beiden Faserkerne KE1, KE2 verlaufen somit entlang einer gemeinsamen Fluchtlinie in z-Richtung. In der Figur 8 kommen sich die unteren Eckkanten der Faserstirnflächen an der gedachten Stoßlinie KL gerade in Berührung, während ansonsten zwischen ihren Stirnflächen SF14, IF2 ein Spaltbereich freibleibt Insgesamt betrachtet liegt somit zwischen den beiden Stirnflächen SF14, IF2 von Figur 8 ein materialfreier Dreiecksbereich. Um nun die beiden Faserenden miteinander verschweißen zu können, werden diese im Bereich ihrer Stirnflächen SF14, EF2 auf Schmelztemperatur gebracht, so daß sich dort ihr Glasmaterial erweicht. Um eine möglichst homogene Schweißverbindung zwischen den beiden Faserenden herstellen zu können, wird der Faserüberhub VOZ6 der zweien Faser FE24 in das erweichte Glasmaterial der ersten, hier im Beispiel in Z- Richtung feststehenden Faser FE14 hinein derart gewählt, daß dieses Materialdefizit an der Stirnseite der ersten Faser FE14 gerade ausgeglichen wird. Die zweite Faser FE24 wird also um einen solchen Vorschubweg VOZ6 in Faserlängsrichtung über die Kontaktierungslinie KL hinaus in das stirnseitig erweichte Glasmaterial der ersten Faser FE14 hineingeschoben, daß soviel Glasmaterial nachrückt, daß die Materiallücke gerade geschlossen wird. Der Vorschubweg VOZ6 entspricht dann vorzugsweise der Hälfte der ermittelten Längendifferenz zwischen der oberen und unteren Abbruchkante der ersten Faserstirnfläche SF14.

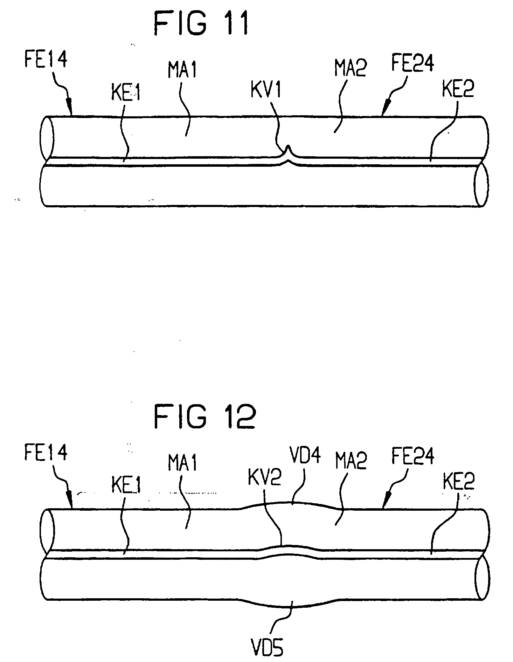

Da der Spaltbereich in X- Richtung betrachtet auf die Unterkanten der Fasern FE14, FE24 zu spitz zuläuft und sich auf deren Oberkanten zu dreiecksförmig aufweitet, verbleibt jedoch unmittelbar nach diesem Überhubvorgang der zweiten Faser FE24 noch eine Materiallücke ML1 im oberen Teil der ineinander geschobenen Fasern, da dort zu wenig Glasmaterial nachgeschoben wurde. Im unteren Teil der Schweißverbindung hingegen wurde zuviel Material der zweiten Faser FE24 in Richtung auf die erste Faser FE14 nachgeschoben. Dort bildet sich deshalb zunächst eine Aufdickungsstelle VD1 aus. Aufgrund seiner Oberflächenspannung kommt es nun zu einem Materialfluß von der Aufdickungsstelle VD1 zur Materiallücke ML1. Der Materialfluß ist in der Figur 9 mit Pfeilchen dargestellt und mit MF1 bezeichnet. Durch diesen Materialfluß von der unteren Aufdickungsstelle VD1 zur Materiallücke ML1 im oberen Teil der Schweißverbindung kann es ggf. dazu kommen, daß die Faserkerne in Strömungsrichtung des Glasmaterialflusses MF1 gedrückt werden. Es kann also zu einer Verbiegung der Faserkerne nach oben kommen. Diese ist in der Figur 11 dargestellt und mit KV1 bezeichnet. Gleichzeitig wird das geschmolzene Glasmaterial aufgrund dieser Strömung MF1 weitgehend homogen, das heißt weitgehend gleichmäßig um den Außenumfang der Schweißverbindung verteilt, so daß sich von außen betrachtet ein durchgehend kreiszylinderförmiger Glasmantel mit konstantem Außendurchmesser ergibt. Im Faserinneren hingegen fluchten nun die Faserkerne KE1, KE2 nicht mehr an der Spleißstelle aufeinander, sondern sind gleichphasig in Materialflußrichtung verbogen. Dadurch kommt es zu einer unerwünschten Dämpfungserhöhung der fertigen Schweißverbindung.

Einer solchen, etwaigen Kernverbiegung läßt sich in einfacher Weise dadurch weitgehend entgegenwirken, daß eine Überkompensation des etwaig vorhandenen Materialdefizits durchgeführt wird. Dies veranschaulicht Figur 10, die die Schweißverbindung zwischen den beiden Fasern unmittelbar nach der Vorschubbewegung bzw. nach dem Faserüberhub ineinander zeigt. Im Gegensatz zu Figur 9 reicht jetzt auch der Faserüberhub im oberen Teil der Schweißverbindung aus, die Materiallücke zu schließen. Dort ergibt sich eine Aufdickungsstelle MF3 von geschmolzenem Glasmaterial. Entsprechend dazu bildet sich auf der unteren Seite der Spleißverbindung eine Materialaufdickung MF4 am Außenumfang der Faseranordnung aus. Da jetzt sowohl auf der Ober- als auch auf der Unterseite, d.h. auf gegenüberliegenden Längsseiten der Faserschweißverbindung eine Materialaufdickung MF3, MF4 gebildet ist, kommt es nur noch zu einem reduzierten Materialfluß von der unteren zur oberen Materialaufdickungsstelle. Dieser reduzierte Materialfluß ist in der Figur 10 mit einem Pfeil angedeutet und mit MF2 bezeichnet. Aufgrund der beidseitigen Materialaufdickungen MF3, MF4 wird gegenüber Figur 9 zusätzlich ein Materialfluß in Faserlängsrichtung hervorgerufen, der zu einer weitgehenden Einebnung der Materialaufdickungen führt. Durch den reduzierten Materialfluß in Querrichtung der Längserstreckung der Faserkerne werden diese weit weniger als bei den Vorschubverhältnissen nach den Figuren 9, 11 verbogen. Figur 12 veranschaulicht nach Durchführung der Faserüberhubbewegung nach Figur 10 die sich einstellenden Fasergeometrieverhältnisse in der fertigen Schweißverbindung zwischen den beiden Fasern FE14, FE24. Ihre miteinander verschweißten Faserkerne KE1, KE2 weisen im Bereich ihrer Schweißverbindungsstelle gegenüber Figur 11 eine reduzierte Verbiegung bzw. Auslenkung KV2 auf. Auf diese Weise sind unzulässig hohe Spleißdämpfungen vermieden. Dies wird allerdings durch einen geringfügig aufgedickten Außendurchmesser im Schweißstellenbereich erkauft.

Zusammenfassend betrachtet hat die Überkompensation des Materialdefizits zwar eine Faserdickung im Schweißstellenbereich zur Folge. Die Schweißstelle ist jedoch bezüglich der resultierenden Übertragungsdämpfung erheblich unkritischer.

Um auch Faserenden mit schlechter Faserstirnflächenqualität weitgehend optimal miteinander verschweißen zu können, das heißt die Kernverbiegung möglichst gering und den Außendurchmesser der Fasern auch über die Spleißstelle hinweg möglichst konstant zu halten, wird die Überkompensation des Materialdefizits zweckmäßigerweise zwischen dem Ein- und Fünffachen der Längendifferenz zwischen den sich gegenüberstehenden Abbruchkanten des jeweiligen Faserendes gewählt. In Formeln ausgedrückt ergibt sich somit bezogen auf eine einzelne Faser vorzugsweise ein Vorschubweg VOZ6 von VOZ6= K LD
mit K = 1 bis 5.

Das Defizit des Materialvolumens, das sich gegebenenfalls zwischen den aktuell vorliegenden, zu verschweißenden Faserende und der gewünschten Soll-Geometrieform ergibt, wird vorzugsweise zwischen 100 bis 500 % überkompensiert. Mit anderen Worten ausgedrückt heißt das, daß die Steuerkennlinie für den Vorschub umso steiler gewählt wird, je größer das Materialdefizit ist. Es kommt dabei allerdings auch umso mehr zu einer Faserverdickung.

Die Erfindung zeichnet sich vor allem dadurch aus, daß auch noch Faserenden mit Fehlern weitgehend einwandfrei miteinander verschweißt werden können. Dadurch, daß der Vorschubweg der geschmolzenen Faserenden ineinander in Abhängigkeit von der Endflächenqualität ihrer Stirnflächen gesteuert wird, kann insbesondere erreicht werden, daß die Verbiegung ihrer Faserkerne möglichst gering gehalten werden kann und gleichzeitig eine unzulässig große Vergrößerung des Außenumfangs im Spleißbereich gegenüber dem ursprünglichen Faseraußendurchmesser weitgehend vermieden wird. Darüber hinaus ist es besonders vorteilhaft, daß für die Realisierung des erfindungsgemäßen Verfahrens die erforderlichen Komponenten in üblichen Spleißgeräten ohnehin vorhanden sind. Dadurch kann das erfindungsgemäße Verfahren kostengünstig sogar nachträglich in solche Spleißgeräte integriert werden.

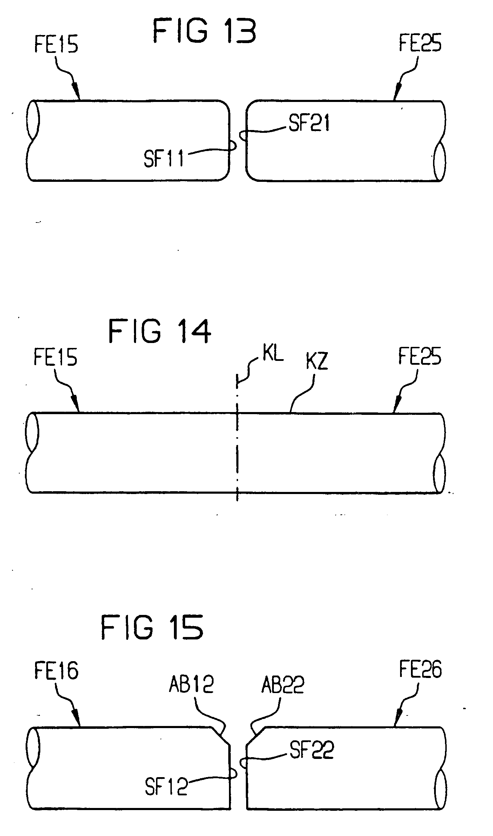

Die Figuren 14, 16 sowie 18 zeigen in schematischer sowie vergrößerter Darstellung die sich jeweils ergebende, zugehörige Schweißverbindung für je zwei miteinander zu verschweißende Faserenden der Figuren 13, 15 sowie 17, deren angeschmolzene Stirnseiten jeweils nur stets mit ein und demselben konstanten Vorschubweg ineinandergeschoben wurden.

Die zwei abgerundeten Stirnflächen SF11, SF21 der beiden Fasern FE1, FE2 von Figur 13 werden lediglich um einen solchen Vorschubweg ineinandergefahren, daß sich gerade eine weitgehend kreiszylinderförmige Schweißverbindung KZ in Figur 14 ergibt.

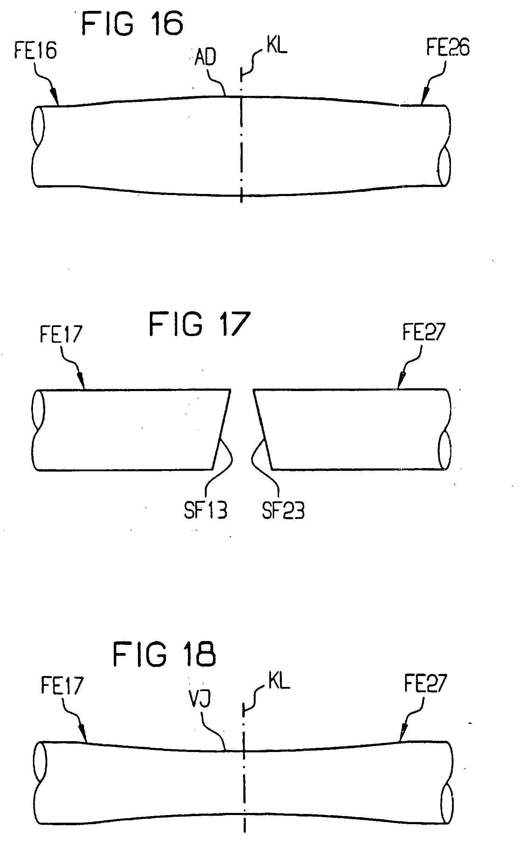

Wird dieser Faserüberhub konstant beibehalten, das heißt fest eingestellt, so würde das zu unzulässigen Schweißverbindungen bei Faserenden mit Stirnflächenfehlern kommen. In der Figur 15 weisen beispielsweise die beiden Faserenden schiefgestellte Stirnflächen SF13, SF23 auf. Würden diese beiden Faserenden mit demselben, konstant eingestellten Faserüberhub wie die Faserenden in Figur 13 ineinandergefahren werden, so wäre dieser Vorschubweg zu gering. Es ergäbe sich eine unzulässig hohe Verwindung ihrer Faserkerne aufgrund des resultierenden Glasmaterialflusses in queraxialer Richtung (bezüglich der ursprünglichen Faserlängsachsen) sowie eine unzulässig hohe Verjüngung an der Spleißstelle, die in der Figur 18 mit VJ bezeichnet ist. Würden die beiden miteinander zu verschweißenden Faserenden hingegen nur mikroskopisch kleine Faserausbrüche an ihren Stirnflächen wie zum Beispiel AB12, AB22 in Figur 15 aufweisen, und mit demselben konstanten Vorschubweg wie die beiden Fasern von Figur 13 ineinandergefahren werden, so wäre der Vorschubweg zu groß, d.h. das in den Schmelzbereich hineingefahrene Glasmaterial zu viel, so daß es zu einer Aufdickung im Schweißbereich käme. Diese Aufdickung ist in der Figur 16 dargestellt und mit AD bezeichnet.

Demgegenüber arbeitet das erfindungsgemäße Verfahren mit einem Vorschubweg, der an die jeweilig vorhandene Stirnflächenqualität der miteinander zu verschweißenden Faserenden individuell, d.h. von Spleiß zu Spleiß neu angepaßt wird. Der Vorschubweg wird dabei für jedes miteinander zu verbindende Faserpaar individuell, das heißt einzeln in Abhängigkeit von deren Stirnflächenqualität optimal eingestellt und zwar so, daß sich weder eine zu große Verdickung noch eine Verjüngung an der Spleißstelle ergibt. Damit wird unabhängig von der jeweilig vorhandenen Endflächenqualität der miteinander zu verschweißenden Faserenden jeweils die geringst mögliche Spleißdämpfung erzielt und zwar bei gleichzeitig weitgehender Beibehaltung des ursprünglichen Faseraußendurchmessers.

Das erfindungsgemäße Spleißverfahren läßt sich in üblichen Spleißgeräten sehr einfach und kostengünstig realisieren, da in diesen meist auch eine Abbildungsoptik, Videokamera und Auswerteelektronik zur automatischen Beurteilung der Endflächenqualität der miteinander zu verschweißenden Faserenden vorhanden sind. Dadurch kann die Steuerung des Vorschubweges ohne großen zusätzlichen Aufwand insbesondere voll automatisch, das heißt ohne Zutun des Benutzers erfolgen. Selbstverständlich kann gegebenenfalls auch eine manuelle Vorgehensweise denkbar sein, bei der beispielsweise die Faser-Endfläche durch Betrachten des Faserbildes vom Spleißgeräte- Benutzer beurteilt und von diesem am Spleißgerät ein entsprechender Korrekturwert für den Vorschubweg eingegeben wird. Dies kann durchaus für einfache Spleißgeräte interessant sein, bei denen mangels Videosystem keine automatische Beurteilung der Endflächenqualität möglich ist.

Vorzugsweise umfaßt das thermische Verschweißen zweier Lichtwellenleiter folgende Arbeitsschritte:

- Faserenden fluchtend ausrichten und auf geringen Längsabstand voneinander setzen;
- Faserenden bis auf Schmelztemperatur erhitzen;
- Faserenden zusammenfahren;
- Faserenden auf Schmelztemperatur halten, bis sich eine homogene Verbindung ausgebildet hat.

Wird das Zusammenbringen, das heißt Zusammenfahren der geschmolzenen Faserenden ineinander nach dem erfindungsgemäßen Prinzip optimiert, so bildet sich eine weitgehend einwandfreie, das heißt optimierte Schweißverbindung aus, deren Querschnittsgeometrie weitgehend identisch mit der ursprünglichen Fasergeometrie einer durchgehenden Lichtleitfaser ist. Dies bedeutet, daß im Bereich der Spleißstelle die miteinander verschweißten Faserkerne der beiden Lichtleitfasern weitgehend ungestört entlang einer gemeinsamen Fluchtlinie weiterlaufen, das heißt für die Faserkerne vor allem Verbiegungen, aber auch Verjüngungen weitgehend vermieden sind. Dies wird insbesondere dadurch erreicht, daß der Vorschubweg so bemessen wird, daß etwaige Materialdefizite, die durch Materialverdampfungen, Materialausbrüche oder Bruchwinkelfehler in der Faserstirnfläche hervorgerufen werden, ausgeglichen bzw. überkompensiert werden. Es wird also einerseits einer Kernverbiegung soweit wie möglich entgegengewirkt, andererseits wird die daraus gegebenenfalls resultierende Faserverdickung so gering wie möglich gehalten.

Der Vorschubweg wird in vorteilhafter Weise so gewählt, daß eine unter den gegebenen Umständen minimal mögliche Dämpfung erzielt wird.

In den Ausführungen zu den Figuren 1 mit 18 wird die erfindungsgemäße Anpassung des Vorschubweges insbesondere jeweils dadurch realisiert, daß vor oder zu Beginn des Schweißvorgangs ein fester Faserlängsabstand eingestellt wird. Nach Ablauf der Vorschweißzeit werden die Fasern um einen variablen Gesamtverfahrweg zusammengefahren. Der Gesamtverfahrweg setzt sich dabei zusammen aus dem fest eingestellten Längsabstand plus dem (variablen) Vorschubweg.

Stattdessen ist es ebenso möglich, anstelle des Gesamtverfahrweges den Faserlängsabstand zu variieren, mit dem sich die beiden Faserenden vor dem Starten des Schweißvorgangs in Faserlängsrichtung betrachtet gegenüberstehen. Dann bleibt der Gesamtverfahrweg der Fasern immer gleich. Dafür wird der Längsabstand jeweils so eingestellt, daß der Vorschub dem (erfindungsgemäßen) Wert entspricht. Dazu wird der Längsabstand umso geringer gewählt, je schlechter die Endflächenqualität ist. In beiden Fällen ist jedoch im Endeffekt der Vorschub bzw. Überhub variabel.

In den Figuren 1 mit 12 wurde mit Schweißeinrichtung SE lediglich die zweite Faser in Z- Richtung auf die bezüglich der Z- Richtung feststehenden, ersten Faser zu verfahren. Selbstverständlich läßt sich der erfindungsgemäße Faserüberhub auch dadurch erzeugen, daß zusätzlich oder unabhängig hiervon die erste Faser entsprechend bewegt wird.

**Patentansprüche**

1. Verfahren zum thermischen Verschweißen zweier einander zugeordneter Lichtleitfasern an ihren jeweiligen Faserenden (FE1, FE2), bei dem für mindestens eines der Faserenden (FE1, FE2) ein optisches Abbild (VB13) in mindestens einer Projektionsebene erfasst wird,
bei dem mindestens ein Abweichungskriterium (LD) für den etwaigen Unterschied des optischen Abbildes (VB13) gegenüber einer gewünschten Soll-Endflächenform (IF2) ermittelt wird, bei dem die angeschmolzenen Faserenden (FE1, FE2) über ihre stirnseitigen Flächen (KL) hinaus um einen Vorschubweg (VOZ) in Faserlängsrichtung ineinander geschoben werden und
bei dem in Abhängigkeit von dem Abweichungskriterium (LD) der Vorschubweg (VOZ) gesteuert wird, so dass der vorschubweg (VOZ) umso größer ist je mehr die Form der stirnseitigen Fläche des mindestens einen Faserendes (FE1, FE2) gegenüber der gewünschten Soll-Endflächenform abweicht.

2. Verfahren nach Anspruch 1,
   **dadurch gekennzeichnet, dass**
   als Soll-Endflächenform (IF2) des mindestens einen Faserendes (FE2) eine gedachte, weitgehend plane Faserstirnfläche gewählt wird, auf der die Zentralachse (ZA2) des Faserendes (FE2) im wesentlichen senkrecht steht.

3. Verfahren nach einem der Ansprüche 1 oder 2,
   **dadurch gekennzeichnet, dass**
   als Abweichungskriterium derjenige Längsabstand (LD) verwendet wird, um den die beiden stirnseitigen Abbruchkanten (KAO, KAU) des mindestens einen Faserendes (FE2) in Faserlängsrichtung gegeneinander versetzt sind.

4. Verfahren nach einem der Ansprüche 1 bis 3,
   **dadurch gekennzeichnet, dass**
   als Abweichungskriterium derjenige Winkel (BW2) verwendet wird, um den die Stirnfläche (SF23) des mindestens einen Faserendes (FE2) gegenüber der gewünschten Soll-Endflächenform (IF2) schief steht.

5. Verfahren nach einem der Ansprüche 1 bis 4,
   **dadurch gekennzeichnet, dass**
   als Abweichungskriterium dasjenige Materialdefizit (DV) herangezogen wird, das dem mindestens einen Faserende (FE2) gegenüber einem gedachten Faserende mit gewünschter Soll-Endflächenform (IF2) fehlt.

6. Verfahren nach einem der Ansprüche 1 bis 5,
   **dadurch gekennzeichnet, dass**
   die beiden Faserenden (FE1, FE2) vor ihrem Verschweißen fluchtend aufeinander ausgerichtet werden.

7. Vorrichtung zum thermischen Verschweißen zweier einander zugeordneter Lichtleitfasern an ihren Faserenden (FE1, FE2), insbesondere nach einem Verfahren gemäß einem der vorhergehenden Ansprüche 1 bis 6, umfassend:

   ein Abbildungssystem mit einem Bildsensor (VKY) eingerichtet zum Erfassen eines optischen Abbildes (VB13) für mindestens eines der Faserenden (FE1, FE2) in mindestens einer Projektionsebene;
   eine Recheneinrichtung (CPU) gekoppelt mit dem Bildsensor (VKY) und eingerichtet zum Ermitteln eines Werts für ein Abweichungskriterium (LD), das die Abweichung des optischen Abbildes (VB13) gegenüber einer gewünschten Soll-Endflächenform (IF2) repräsentiert;
   ein Verschiebemittel (SGZ) eingerichtet zum Verschieben der Faserenden (FE1, FE2) relativ zueinander längs ihrer Faserlängsrichtung; und
   eine Steuerungseinrichtung (CPU, PO) gekoppelt mit dem Verschiebemittel (SGZ) und eingerichtet zum Steuern der Verschiebung der Faserenden (FE1, FE2), wenn angeschmolzen, über ihre stirnseitigen Erstkontaktierungsstellen (KL) hinaus ineinander um einen Vorschubweg (VOZ) in Abhängigkeit von dem Wert des Abweichungskriteriums (LD), so dass der Vorschubweg (VOZ) um so größer gesteuert wird, je mehr das optische Abbild des mindestens einen Faserendes (FE1, FE2) gegenüber der gewünschten Soll-Endflächenform als abweichend ermittelt ist.

8. Vorrichtung nach Anspruch 7,
   **dadurch gekennzeichnet, dass**
   die Verschiebemittel (SGZ) Bestandteil eines Lichtwellenleiter-Spleißgerätes sind.

**Claims**

1. Method for thermal fusing of two mutually adjoined optical fibres at their respective fibre ends (FE1, FE2), in which for at least one of the fibre ends (FE1, FE2) an optical image (VB13) is acquired in at least one projection plane, in which at least one deviation criterion (LD) is determined for the possible difference between the optical image (VB13) and a desired end-face shape (IF2), in which the incipiently fused fibre ends (FE1, FE2) are pushed one inside another in the fibre longitudinal direction beyond their end-side faces (KL) by a feed path (VOZ), and in which the feed path (VOZ) is controlled as a function of the deviation criterion (LD) such that the feed path (VOZ) is larger the more the shape of the end-side face of the at least one fibre end (FE1, FE2) deviates from the desired end-face shape.

2. Method according to Claim 1, **characterized in that** an intended, largely plane fibre end face, to which the central axis (ZA2) of the fibre end (FE2) is essentially perpendicular, is selected as the desired end-face shape (IF2) of the at least one fibre end (FE2).

3. Method according to one of Claims 1 or 2, **characterized in that** use is made as deviation criterion of that longitudinal spacing (LD) by which the two end-face rupture edges (KAO, KAU) of the at lease one fibre end (FE2) are mutually offset in the fibre longitudinal direction.

4. Method according to one of Claims 1 to 3, **characterized in that** use is made as deviation criterion of that angle (BW2) by which the end face (SF23) of the at least one fibre end (FE2) is skewed with respect to the desired end-face shape (IF2).

5. Method according to one of Claims 1 to 4, **characterized in that** use is made as deviation criterion of that material deficit (DV) which is lacking for the at least one fibre end (FE2) with respect to an intended fibre end with a desired end-face shape (IF2).

6. Method according to one of Claims 1 to 5, **characterized in that** the two fibre ends (FE1, FE2) are aligned flush with one another before they are fused.

7. Device for thermal fusing of two mutually adjoined optical fibres at their fibre ends (FE1, FE2), in particular using a method in accordance with one of the preceding Claims 1 to 6, comprising:

   an imaging system with an image sensor (VKY) set up for acquiring an optical image (VB13) for at least one of the fibre ends (FE1, FE2) in at least one projection plane;
   a central processing unit (CPU) coupled to the image sensor (VKY) and set up for acquiring a value for a deviation criterion (LD) which represents the deviation of the optical image (VB13) from a desired end-face shape (IF2);
   a displacing means (SGZ) set up for displacing the fibre ends (FE1, FE2) relative to one another along their fibre longitudinal direction; and
   a control device (CPU, PO) coupled to the displacing means (SGZ) and set up for controlling the displacement of the fibre ends (FE1, FE2), when incipiently fused, one inside another beyond their end-side first contact sites (KL) by a feed path (VOZ) as a function of the value of the deviation criterion (LD) such that the feed path (VOZ) is controlled larger the more the optical image of the at least one fibre end (FE1, FE2) is determined as deviating from the desired end-face shape.

8. Device according to Claim 7, **characterized in that** the displacing means (SGZ) are a constituent of an optical waveguide splicer.

**Revendications**

1. Procédé de soudage thermique de deux fibres optiques associées l'une à l'autre à leurs extrémités (FE1, FE2) respectives, dans lequel on détecte, pour au moins l'une des extrémités (FE1, FE2) de fibre, une reproduction (VB13) optique dans au moins un plan de projection,
   dans lequel on détermine au moins un critère (LD) d'écart pour la différence éventuelle entre la reproduction (VB13) optique et une forme (IF2) de surface d'extrémité de consigne souhaitée,
   dans lequel on déplace l'une dans l'autre les extrémités (FE1, FE2) de fibre fondues au-delà de leur surface (KL) frontale d'un trajet (VOZ) d'avance dans la direction longitudinale des fibres, et
   dans lequel on règle le trajet (VOZ) d'avance en fonction du critère (LD) d'écart de façon à ce que le trajet (VOZ) d'avance soit d'autant plus grand que la forme de la surface frontale de la au moins une extrémité (FE1, FE2) de fibre s'écarte de la forme de la surface d'extrémité de consigne souhaitée.

2. Procédé suivant la revendication 1,
   **caractérisé en ce que**
   l'on choisit comme forme (IF2) de surface d'extrémité de consigne de la au moins une extrémité (FE2) de fibre, une surface frontale de fibre imaginaire, dans une grande mesure plane, à laquelle l'axe (ZA2) central de l'extrémité (FE2) de fibres est sensiblement perpendiculaire.

3. Procédé suivant l'une des revendications 1 ou 2,
   **caractérisé en ce que**
   on utilise comme critère d'écart la distance (LD) longitudinale dont les deux arêtes (KAO, KAU) de rupture frontale de la au moins une extrémité (FE2) de fibre sont décalées l'une par rapport à l'autre dans la direction longitudinale des fibres.

4. Procédé suivant l'une des revendications 1 à 3,
   **caractérisé en ce que**
   on utilise comme critère d'écart l'angle (BW2) dont la surface (SF23) frontale de la au moins une extrémité (FE2) de fibre est inclinée par rapport à la forme (IF2) de surface d'extrémité de consigne souhaitée.

5. Procédé suivant l'une des revendications 1 à 4,
   **caractérisé en ce que**
   on tire partie comme critère d'écart du déficit (DV) de matière dont manque au moins une extrémité (FE2) de fibre par rapport à une extrémité de fibre imaginaire ayant la forme (IF2) de surface d'extrémité de consigne souhaitée.

6. Procédé suivant l'une des revendications 1 à 5,
   **caractérisé en ce que**
   on aligne l'une sur l'autre les deux extrémités (FE1, FE2) de fibres avant leur soudage.

7. Installation de soudage thermique de deux fibres optiques associées l'une à l'autre à leur extrémité (FE1, FE2), notamment par un procédé suivant l'une des revendications 1 à 6 précédentes, comprenant :

   un système de reproduction ayant un capteur (VKY) d'image agencé pour détecter une reproduction (VB13) optique d'au moins l'une des extrémités (FE1, FE2) de fibres dans au moins un plan de projection ;
   un dispositif (CPU) informatique couplé au capteur (VKY) d'image et agencé pour déterminer une valeur d'un critère (LD) d'écart, qui représente l'écart de la reproduction (VB13) optique par rapport à une forme (IF2) de surface d'extrémité de consigne souhaitée ;
   un moyen (SGZ) de déplacement des extrémités (FE1, FE2) de fibres l'une par rapport à l'autre le long de leur direction longitudinale de fibres ; et
   un dispositif (CPU, PO) de commande couplé au moyen (SGZ) de déplacement et agencé pour commander le déplacement des extrémités (FE1, FE2) de fibre lorsqu'elles sont fondues au-delà de leurs points (KL) de premier contact frontal l'une dans l'autre d'un trajet (VOZ) d'avance en fonction de la valeur du critère (LD) d'écart de sorte que le trajet (VOZ) d'avance est réglé d'une manière d'autant plus grande qu'il est déterminé que la reproduction optique de la au moins une extrémité (FE1, FE2) de fibres s'écarte de la forme de surface d'extrémité de consigne souhaitée.

8. Installation suivant la revendication 7,
   **caractérisé en ce que**
   le moyen de déplacement fait partie d'un appareil d'épissure de guide d'ondes lumineuses.

FIG 1

## FIG 2

## FIG 3

FIG 4

FIG 5

## FIG 6

BA

MS1

MZ1

KAO

VB23

IF2

SF23

ZA2

DV

D

KAU

LD

X

MZ2

MSK

BW2

KL

Z

## FIG 7

VOZ5

SK3

SK2

SK1

VOZ2

LD

## FIG 8

FE14  KE1  MA1  SF14  KL  IF2  MA2  FE24  KE2  VOZ6

X

Z

## FIG 9

FE14  KE1  MA1  ML1  KL  MA2  FE24  KE2

MF1

VD1

## FIG 10

FE14  KE1  MA1  MF3  KL  MA2  FE24  KE2

VD2  MF2  VD3

MF4

## FIG 11

FE14  KE1  MA1  KV1  MA2  FE24  KE2

## FIG 12

FE14  KE1  MA1  KV2  VD4  MA2  FE24  KE2

VD5

## FIG 13

FE15

FE25

SF21

SF11

## FIG 14

FE15

KL   KZ   FE25

## FIG 15

FE16

AB12   AB22   FE26

SF22

SF12

## FIG 16

FE16  AD  KL  FE26

## FIG 17

FE17  FE27

SF13  SF23

## FIG 18

FE17  VJ  KL  FE27